# EUROPÄISCHE PATENTANMELDUNG

(11) **EP 3 892 809 A1**
(43) Veröffentlichungstag der Anmeldung: **13.10.2021**
(21) Anmeldenummer: 21166268.9
(22) Anmeldetag: 31.03.2021
(51) Int. Cl.: E06B 3/277, B29C 65/64, E06B 3/263

(54) **VERFAHREN ZUR HERSTELLUNG EINES VERBUNDPROFILS**

(30) Priorität: 08.04.2020 DE 102020109830
(71) Anmelder: Ensinger GmbH, 71154 Nufringen (DE)
(72) Erfinder: MÖLLER, Michael, 93413 Cham (DE); KÖNIGSBERGER, Bernhard, 93464 Tiefenbach (DE); GÖTTLINGER, Gerhard, 93467 Willmering (DE)
(74) Vertreter: Hoeger, Stellrecht & Partner Patentanwälte mbB

(57) **Zusammenfassung**

Es wird ein Verfahren zur wirtschaftlichen Herstellung von Verbundprofilen vorgeschlagen, welche insbesondere für den Bausektor - vor allem für die Herstellung von Fenster-, Tür- und Fassadenprofilen - geeignet sind. Das Verfahren umfasst die Schritte:
Bereitstellen eines ersten sich in eine Längsrichtung erstreckenden Profilteils aus einem ersten Kunststoffmaterial mit einem Profilbereich, der aus einem bei einer ersten Temperatur thermisch plastifizierbaren zweiten Kunststoffmaterial hergestellt ist,
Bereitstellen eines zweiten sich in eine Längsrichtung erstreckenden Profilteils aus einem bei der ersten Temperatur thermisch nicht plastifizierbaren Material und mit einer entlang der Längsrichtung des zweiten Profilteils ausgebildeten Aufnahmestruktur, mit der der Profilbereich des ersten Profilteils formschlüssig verbindbar ist,
In-Kontakt-Bringen des Profilbereichs des ersten Profilteils mit der Aufnahmestruktur des zweiten Profilteils,
Plastifizieren des zweiten Kunststoffmaterials des Profilbereichs mittels Erwärmen auf die erste Temperatur und
Verformen des plastifizierten Profilbereichs unter Ausbildung eines Formschlusses zwischen dem Profilbereich und der Aufnahmestruktur unter Erhalt der Geometrie der Aufnahmestruktur.

## Beschreibung

Die Erfindung betrifft ein Verfahren zur Herstellung von sich in eine Längsrichtung erstreckenden Verbundprofilen, insbesondere formschlüssig verbundene Kunststoff-Metall-Verbundprofile, sowie unter Verwendung dieses Verfahrens hergestellte Verbundprofile, welche sich insbesondere für den Einsatz in anspruchsvollen Konstruktionsanwendungen, z.B. im Bausektor bei der Herstellung von Fenster-, Türen- und Fassadenelementen oder im Geräte-/Gerüst-/ Gehäusebau oder im Fahrzeugbau (Boden-, Luft-, Wasserfahrzeuge) eignen.

Herkömmliche Verbundprofile sind beispielsweise Kunststoff-Metallverbundprofile, deren Profilteile aus unterschiedlichen Werkstoffen hergestellt sind, welche insbesondere für die vorgenannten, unterschiedlichen Zwecke in breitem Umfang eingesetzt werden.

Bei Verbundprofilen, welche z.B. in breitem Umfang in der Bauindustrie eingesetzt werden, nutzt man häufig die Kombination der jeweils vorteilhaften Eigenschaften von Kunststoff und Metall, z.B. die gute Duktilität und Dauerhaftigkeit von Metallen sowie das geringe Gewicht, die gute Formbarkeit und die guten Isoliereigenschaften (elektrisch, thermisch) von Kunststoffmaterialien.

Im Bereich der Metallfenster, -türen sowie in der Fassadentechnik werden solche Verbundprofile in großem Umfang eingesetzt. In der Regel werden einfach herstellbare Aluminiumprofile mit Kunststoffprofilen verbunden, um daraus Fassadenelemente, Fenster, Türen oder andere Gebäudeöffnungen (z.B. Lüftungsdurchbrüche etc.) herzustellen.

Die herkömmliche Verbindungstechnik verwendet eine Einrolltechnik zur formschlüssigen Verbindung der Kunststoff- und Metallprofile in unterschiedlichen Ausführungen.

Typischerweise wird hier ein Kunststoffprofil mit sogenannten Einrollfüßen in ein Metallprofil mit passender geometrischer Aufnahme zuerst lose eingeführt und dann über die Umformung einer metallischen Profilkomponente (sogenannter "Hammer") durch das Einrollen letztendlich formschlüssig fixiert. Der Einrollfuß des Kunststoffprofils wird dann durch den metallischen "Hammer" und einen metallischen "Amboss" im Formschluss gehalten. Gegebenenfalls wird das Metallprofil im Bereich der Aufnahme mit einer Oberflächenstruktur versehen, z.B. gerändelt, um eine Kraftübertragung im Bereich des Formschlusses zu verbessern.

Daneben kommen Sonderlösungen zum Einsatz, z.B. das Einkleben von Kunststoffprofilen als stoffschlüssige Verbindung. Grundsätzlich ist zu beachten, dass Verbundprofile für Fenster und Fassadenanwendungen sicherheitsrelevante Bauteile darstellen können, die z.B. in Deutschland nach DIN EN 14024 eignungsgeprüft werden.

Nachteile des bisher etablierten Verfahrens zur Herstellung von Verbundprofilen für Fenster, Türen, Fassaden, nämlich des Einrollens von Kunststoffprofilen (z.B. von extrudierten Profilen aus PA66 GF25 in stranggepresste Aluminiumprofile) in Metallprofile sind:
- Probleme beim Einfädeln bzw. beim Einziehen der Kunststoffprofile in die entsprechenden Nuten der Aluminiumprofile, z.B. aufgrund oberflächlicher Verschmutzung, von Schnittgraten, maßlichen Abweichungen bzw. Schwankungen;
- hoher (Kosten-)Aufwand zur Erhöhung der Schubfestigkeit der Kunststoff-Metall Verbindung, z.B. durch Rändeln der Aluminiumprofile, durch Einbringen von die Verschubfestigkeit-fördernden Metalldrähten in die Kunststoffprofile;
- limitierte Möglichkeiten zur Verbesserung der Torsionssteifigkeit in bestehenden Verbunddesigns;
- schwankende Festigkeit der Kunststoff-Metall-Verbindung durch Verschleiß der Einrollanlagen, Geometrieabweichungen und maßliche Schwankungen der Fügepartner, Alterungsphänomene der Werkstoffe (Feuchte, Wärme);
- eine serienbegleitende Vollprüfung zur Qualitätssicherung ist im Einrollverfahren nicht möglich;
- eingeschränkte Designfreiheit bzw. störende Optik durch sichtbare Rändelspuren/Einrollspuren;
- geringe Flexibilität des Verfahrens, um beispielsweise Vorgaben des Kunden oder Gesetzgebers nach gesteigerter Wärmeisolierung, bzw. Senkung der Uf-Werte (Wärmedurchgangskoeffizientenwerte), um Energieeinsparziele zu erreichen.

Den unterschiedlichen oben genannten Problemen wird im Stand der Technik auf unterschiedliche Art und Weise versucht zu begegnen.

In der Fachzeitzeitschrift Kunststoffe in Ausgabe 1/2018 wird ab Seite 29 anhand eines kurzen Profilmusters ein Konzept zur formschlüssigen Verbindung von Kunststoff- und Metallprofilsegmenten zur Herstellung von Verbundprofilsegmenten für Fenster/Türen/Fassadenanwendungen beschrieben. Hierbei wird das Metallteil mittels eines Laserstrahls aufgeraut oder strukturiert, um eine Vielzahl feiner Hinterschnitte zu erzeugen, welche dann einen sogenannten Haftgrund für ein Kunststoffprofil bilden. Das Kunststoffbauteil wird mit dem Metallteil verbunden. Danach wird der Kunststoff angeschmolzen, indem das Metallbauteil mittels Laserstrahl oder induktiv erhitzt wird, und in die Struktur des Metallteils gepresst. Der Artikel zeigt ein offensichtlich formschlüssig verbundenes kurzes Profilmuster von einer Länge, die etwa einer Handbreite entspricht, lehrt aber nicht wie der Kunststoff angeschmolzen wird oder wie ein längeres Verbundprofil z.B. von mehreren Metern Länge hergestellt werden kann. Die Kosten einer derartigen Laserstrukturierung des Aluminiumbauteils sind relativ hoch, was aus den geringen Flächen-Geschwindigkeiten der Laserstrukturierung und üblicherweise hohen Anschaffungs- und Wartungskosten resultiert. Dies steht dem Anspruch eines wirtschaftlichen Fügeprozesses entgegen.

Die EP 1 510 383 A2 beschreibt eine aus Kunststoff im Spritzgussverfahren hergestellte Führungsschiene aus unterschiedlichen Werkstoffen, u.a. thermoplastischen Werkstoffen. Hilfsweise können mittels Ultraschall weitere Bauteile punktuell stoffschlüssig verbunden werden.

Das Einpressen, Aufpressen oder Aufclipsen von Metallprofilen oder -streifen auf Kunststoffprofile, wobei keine thermische Energie zugeführt wird und direkt über einen Formschluss bzw. kalte Verformung ein Verbundbauteil entsteht, ist in der WO 2017/186722 A1 und auch schon früher in der DE 32 36 357 A1 beschrieben. Dabei wird die partielle Ummantelung von Kunststoffprofilen durch metallische Bänder erzielt.

Die Aufgabe der vorliegenden Erfindung besteht darin, ein wirtschaftliches Verfahren zur Herstellung von Verbundprofilen der eingangs beschriebenen Art bereitzustellen, welches insbesondere einen dauerhaften, festen Verbund der Profilteile erzeugt, wobei das erhaltene Verbundprofil darüber hinaus gute Eigenschaften für den Einsatz in technisch anspruchsvollen Konstruktionsanwendungen aufweist. Diese Konstruktionsanwendungen beinhalten insbesondere Anwendungen im Bausektor, vor allem die Herstellung von Fenster-, Tür- und Fassadenprofilen und daraus gefertigte Fenster-, Tür- und Fassadenelemente.

Diese Aufgabe wird durch ein Verfahren mit den Merkmalen des Anspruchs 1 gelöst.

Das erfindungsgemäß herzustellende Verbundprofil umfasst mindestens zwei Profilteile, die sich jeweils in eine Längsrichtung erstrecken und die sich in ihrer werkstofflichen Zusammensetzung voneinander unterscheiden. Ein erstes Profilteil ist aus einem ersten Kunststoffmaterial hergestellt und umfasst einen Profilbereich aus einem bei einer ersten Temperatur T₁ thermisch plastifizierbaren zweiten Kunststoffmaterial. Ein zweites Profilteil ist aus einem bei der ersten Temperatur T₁ thermisch nicht plastifizierbaren Material hergestellt, beispielsweise aus Metall.

Diese Profilteile werden gemäß dem erfindungsgemäßen Verfahren in deren Längsrichtung miteinander verbunden, wobei der erzielte Formschluss senkrecht zur Längsrichtung zudem bei Bedarf auch in Längsrichtung verschubfest ausgestaltet werden kann.

Das erfindungsgemäße Verfahren erlaubt nicht nur eine wirtschaftliche Herstellung des Verbundprofils, sondern gewährleistet auch ein hohes Maß an Prozesssicherheit, das bei dem herkömmlichen Einrollverfahren nicht gegeben ist.

Mit dem erfindungsgemäßen Verfahren können somit längere Verbundprofile erhalten werden, z.B. Verbundprofile mit einer Länge von mindestens 50 cm oder bevorzugt mit einer Länge von mindestens 3 Metern. Handelsübliche Verbundprofile für Metallfester /-türen /-fassaden weisen typischerweise Längen von 5 m bis 7,5 m auf, abweichende Längen sind aber möglich.

Ebenso ist es möglich auch endlose Verbundprofile (d.h. Längen von mehreren hundert Metern) herzustellen, diese können dann anstatt in Form von Stangenware auch auf Spulen gewickelt werden, sofern die Profilgeometrie und die Werkstoffe die nötigen Biegeradien ermöglichen.

Der Formschluss zwischen dem ersten und dem zweiten Profilteil wird bevorzugt durchgängig ausgeführt, kann aber auch regelmäßig oder unregelmäßig unterbrochen sein.

Die erfindungsgemäße Verbindungstechnik eignet sich insbesondere auch zur Herstellung von Verbundbauteilen zur Verwendung im Fahrzeugbau (Schienen-, Land-, Wasser- und Luftfahrzeuge, etc.) ebenso im Lüftungs-, Anlagen- und Gerätebau (Versteifungs-, Verstärkungsprofile, Rahmenprofile etc.).

Bei der Herstellung von Verbundprofilen für Fenster-, Türen- oder Fassadenelemente ist das erste Profilteil bevorzugt ein Isolierprofil für thermische Trennung. Allgemein bekannt sind solche Isolierprofile unter dem Handelsnamen insulbar® der Fa. Ensinger GmbH. Diese Isolierprofile können in vielen Ausführungen, d.h. Formen und Werkstoffen, erzeugt werden. Bevorzugt sind die Kunststoffprofile hergestellt aus schmelzbaren Kunststoffen oder Kunststoffwerkstoffen auf Basis thermoplastischer Polymere, z.B. Polyamide, Polyester, Polyolefine, Vinylpolymere, Polyketone, Polyether, sowie Mischungen und Blends davon. Ebenso sind Elastomere, insbesondere thermoplastische Elastomere, geeignet.

Das erfindungsgemäße Verfahren ermöglicht insbesondere, Kunststoffprofilteile mit Metallprofilteilen, insbesondere mit Aluminiumprofilen, kontinuierlich zu verbinden. Hierbei wird eine formschlüssige Verbindung erzeugt, indem ein oder mehrere Profilbereiche des ersten (Kunststoff-)Profilteils mit einer Aufnahmestruktur des zweiten (Metall-)Profilteils, beispielsweise einer Nut, in Kontakt gebracht werden, danach das zweite Kunststoffmaterial des Profilbereichs des ersten Profilteils in einer in Längsrichtung begrenzten Zone (Fügebereich) plastifiziert und unter Ausübung eines Drucks mechanisch verformt, insbesondere eingesenkt wird, wobei das plastifizierte zweite Kunststoffmaterial und die Aufnahmestruktur des zweiten (Metall-)Profilteils einen Formschluss ausbilden, so dass nach dem Erstarren des zweiten Kunststoffmaterials ein Verbundprofil mit einer in Längsrichtung verlaufenden Formschlussverbindung erhalten wird.

Dieses Verfahren kann bevorzugt im Durchlauf, d.h. mit einer kontinuierlichen Längsbewegung der Profilteile bzw. des Verbundprofils in Prozessrichtung (entspricht der Profil-Längsrichtung) erfolgen.

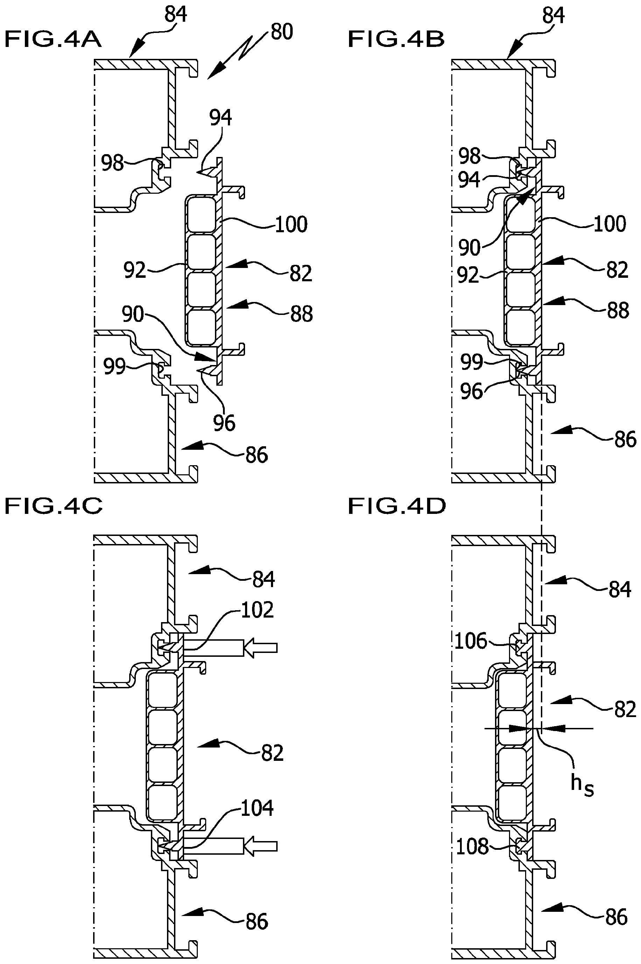

Das formschlüssige Verbinden von Werkstoffkombinationen Kunststoff-Metall durch Ultraschall ist an sich bekannt, beispielsweise aus Saechtling Kunststoff Taschenbuch, 30. Ausgabe von 2007 (ISBN 978-3-446-40352-9), Kapitel 4.13.1.4 bzw. der Abb. 4.137F. Hier ist das Verfahren allerdings auf das Einbringen eines kleinteiligen Metallinserts in Form einer Gewindebuchse in ein Kunststoff-Formteil durch Anwendung von Ultraschall beschränkt.

Die DE 32 03 631 A1 erwähnt die Möglichkeit, ein Zusatzmaterial zur Verbesserung des Formschlusses eines Metall-Kunststoff-Verbundprofils zu verwenden und dieses gegebenenfalls im Rahmen einer Ultraschallbehandlung in formschlusserhöhende Ausnehmungen einer Aufnahmenut einzupressen. Allerdings ist hier die Voraussetzung das Vorhandensein einer Formschlussverbindung, die lediglich verbessert wird.

Im Unterschied dazu wird erfindungsgemäß ein Formschluss als solcher erst durch das Plastifizieren und Verformen des zweiten Kunststoffmaterials erzeugt, so dass das Verfahren insgesamt mit erheblich geringerem Aufwand und geringeren Anforderungen sowohl an die Geometrie des Profilbereichs als auch der Aufnahmestruktur durchgeführt werden kann. Darüber hinaus wird durch das erfindungsgemäße Verfahren eine erheblich verbesserte Designfreiheit unter anderem auch mit der Möglichkeit, eine verbesserte Isolierwirkung zu erzielen, bereitgestellt.

In der DE 10 2017 107 684 A1 betreffend ein modulares Baukastensystem für Kunststoffprofile wird die Anwendung eines Ultraschallverfahrens zur Verschweißung von Kunststoffbauteilen miteinander vorgeschlagen, um aus einfachen Kunststoffprofilformen Bauteile mit komplexeren Profilquerschnitten herzustellen. Die Möglichkeit, Verbundprofile mit einer Formschlussverbindung von zwei Profilteilen herzustellen, ist nicht offenbart.

Das Plastifizieren des zweiten Kunststoffmaterials des Profilbereichs des ersten Profilteils gemäß der vorliegenden Erfindung kann auf verschiedene Weise erfolgen.

Gemäß einer Variante des erfindungsgemäßen Verfahrens kann das zweite Profilteil, insbesondere ein Metallprofilteil, vorgewärmt bzw. auf eine ausreichend hohe Temperatur oberhalb der Temperatur T₁ erhitzt werden, um das Plastifizieren des zweiten Kunststoffmaterials des Profilbereichs des ersten Profilteils zu bewirken, d.h. um damit die Wärmeenergie zu liefern, um das zweite Kunststoffmaterial des Profilbereichs des ersten Profilteils (im Folgenden auch Abschmelzbereich eines Kunststoffprofils genannt) in ausreichendem Maße für die nachfolgende Verformung zu plastifizieren. Hierfür sind insbesondere Kontakterwärmen, induktives Erhitzen, z.B. mittels Führen der metallischen Profile entlang oder durch Induktionsspulen, Infrarotbestrahlung oder auch das Erwärmen durch Beflammen des zweiten Profilteils etc. geeignet.

Gemäß einer weiteren bevorzugten Variante des erfindungsgemäßen Verfahrens wird das Plastifizieren mittels Ultraschalleintrag, insbesondere unter Verwendung einer Sonotrode, durchgeführt. Diese Variante eignet sich nicht nur für Verbundprofile, bei denen das zweite Profilteil ein Metallbauteil ist, sondern ebenfalls für zweite Profilteile, welche aus Keramikwerkstoffen, Glas, Holz, einem thermoplastischen Kunststoffmaterial mit einem Schmelzpunkt oder einer Glasübergangstemperatur oder gegebenenfalls einer Erweichungstemperatur oberhalb der ersten Temperatur T₁ und einem duroplastischen Kunststoffmaterial hergestellt ist.

Bei dem erfindungsgemäßen Verfahren kann die Aufnahmestruktur sehr unterschiedlich ausgebildet werden. Gemäß einer Variante wird das zweite Profilteil mit einem sich in Längsrichtung erstreckenden Aufnahmebereich als Aufnahmestruktur ausgebildet, der insbesondere die Form einer Aufnahmenut aufweist. Insbesondere kann die Aufnahmenut sich kontinuierlich in Längsrichtung des zweiten Bauteils bzw. Profilteils erstrecken.

Des Weiteren kann gemäß dem erfindungsgemäßen Verfahren das zweite Profilteil mit einer Aufnahmestruktur ausgebildet werden, welche eine Mehrzahl an Ausnehmungen umfasst, welche in Längsrichtung des zweiten Profilteils insbesondere hintereinander fluchtend angeordnet sind, dies können beispielsweise Oberflächenstrukturierungen und/oder Oberflächendurchdringungen sein.

Erfindungsgemäß wird der Profilbereich des ersten Profilteils bevorzugt als ein vorspringender Profilbereich ausgebildet, z.B. als senkrecht von einer Oberfläche des ersten Profilteils vorspringender Profilbereich. Der Profilbereich lässt sich insbesondere als kontinuierlicher, durchgängiger, sich in Längsrichtung des ersten Profilteils erstreckender Vorsprung ausbilden, oder als mehrere in Längsrichtung des ersten Profilteils hintereinander mit Abstand zueinander angeordnete, gegebenenfalls fluchtend ausgebildete, nicht-durchgängige Vorsprungsegmente.

Das in dem erfindungsgemäßen Verfahren verwendete das erste Profilteil kann nicht nur mit einem Profilbereich sondern auch mit einem weiteren Profilbereich ausgestattet werden, welcher ebenfalls aus dem zweiten Kunststoffmaterial ausgebildet wird. Typischerweise erstreckt sich der weitere Profilbereich parallel zum ersten Profilbereich mit einem vorgegebenen seitlichen Abstand senkrecht zur Längsrichtung des ersten Profilteils.

Bei dieser Variante des erfindungsgemäßen Verfahrens kann ein sich in eine Längsrichtung erstreckendes drittes Profilteil (als weiteres zweites Profilteil) aus einem bei der ersten Temperatur T₁ thermisch nicht plastifizierbaren Material bereitgestellt werden, wobei das dritte Profilteil eine sich in dessen Längsrichtung erstreckende Aufnahmestruktur aufweist. Der zweite oder weitere Profilbereich des ersten Profilteils kann dann mit dem Aufnahmebereich des dritten Profilteils in Kontakt gebracht und unter Ausbildung eines Formschlusses plastifiziert werden. Dies kann im Wesentlichen gleichzeitig oder auch zeitlich versetzt zu dem In-Kontakt-Bringen des ersten Profilbereichs mit dem Aufnahmebereich des zweiten Profilteils erfolgen.

Der Profilbereich oder die Profilbereiche des ersten Profilteils können integral mit dem ersten Profilteil, beispielsweise in einem einzigen Extrusionsvorgang, hergestellt werden, wobei dann insbesondere das erste und das zweite Kunststoffmaterial auf demselben Polymerwerkstoff basieren, insbesondere auch aus einem identischen Kunststoffmaterial hergestellt werden.

Alternativ lassen sich der oder die Profilbereiche an den Körper des ersten Profilteils anformen, insbesondere koextrudieren, in einem nachgelagerten Schritt anextrudieren, anschweißen oder aufkleben. Auch hier können das erste und das zweite Kunststoffmaterial auf demselben Polymerwerkstoff basieren oder auch aus einem identischen Kunststoffmaterial hergestellt sein. Alternativ können verschiedene Polymerwerkstoffe für die Herstellung des oder der Profilbereiche einerseits und des ersten Profilteils andererseits Verwendung finden.

Diese potentielle Werkstoffvielfalt ermöglicht es Teilbereiche der Profile bzw. die Kunststoffprofile und/oder die daraus hergestellten Verbundprofile zu optimieren, z.B. hinsichtlich mechanischer Kennwerte (Steifigkeit, Festigkeit, Schlagzähigkeit, Bruchdehnung, Formbeständigkeit, Schubfestigkeit, Schubfedersteifigkeit, Kriechneigung etc.), Gewicht, Herstellkosten, Isolationswirkung (thermisch, elektrisch, Schall etc.), Rezyklierbarkeit (werkstofflich, chemisch, thermisch), Beständigkeit gegenüber chemischen/physikalischen Einflüssen (Wind und Wetter, UV-Strahlung, Temperaturwechseln, Prozesschemikalien und Reinigungsmitteln), Lackierbarkeit (Nasslacke, Pulvereinbrennlacke, Primer), Brandschutz/Flammschutz.

Erfindungsgemäß können insbesondere auch flache, bandförmige Kunststoffbauteile einfach zur Nutzung als erstes Profilteil in dem erfindungsgemäßen Verfahren angepasst werden, indem der benötigte Profilbereich und gegebenenfalls weitere Funktionselemente mit diesen Bauteilen verbunden werden. Die hierfür geeigneten Verfahren sind bekannt, z.B. das Anextrudieren, Aufschweißen oder Aufkleben.

Vorteilhaft bei der Verwendung von aus lang- und endlosfaserverstärkten Composites zur Herstellung des ersten Profilteils sind die überlegenen Werkstoffeigenschaften, vor allem die erhöhte Eigensteifigkeit, Festigkeit (z.B. unter Zug-, Biege-, Torsions-Belastung) sowie in speziellen Fällen die Verbesserung der Brandschutzeigenschaften durch temperaturfeste Fasergewebe im Profilkörper.

Wie schon erwähnt, lässt sich gemäß dem erfindungsgemäßen Verfahren das bei der ersten Temperatur T₁ thermisch nicht plastifizierbare Material aus einer breiten Palette von Werkstoffen auswählen. Dies gilt nicht nur für das zweite, sondern gegebenenfalls auch für das dritte Profilteil. Insbesondere wird das bei der ersten Temperatur T₁ thermisch nicht plastifizierbare Material ausgewählt aus einem metallischen Werkstoff, insbesondere basierend auf Aluminium oder Eisen, einem Keramikwerkstoff, Glas, Holz, einem thermoplastischen Kunststoffmaterial mit einem Schmelzpunkt oder einer Glasübergangstemperatur oberhalb der ersten Temperatur T₁ und einem duroplastischen Kunststoffmaterial.

Die zweiten Profilteile, insbesondere in Form von Metallprofilen, der erfindungsgemäß hergestellten Verbundprofile können ebenfalls in unterschiedlichen Geometrien hergestellt werden und im Querschnitt einfache geometrische Grundformen (z.B. im Wesentlichen rund, oval, rechteckig, quadratisch) oder kompliziertere symmetrische oder asymmetrische Querschnitte und gegebenenfalls unterschiedliche Wandstärken aufweisen. Ebenso kann beispielsweise eine zusätzliche Strukturierung entlang der Längsrichtung vorgesehen sein, z.B. periodische oder zufällige Anordnung von Durchbrüchen bzw. Ausnehmungen oder Materialanhäufungen oder Deformationen, z.B. durch Rändeln, Bohren, Ausstanzen, Prägung, Kerben oder anderweitige chemische oder physikalische Strukturierungsverfahren (Abtragen durch Ätzprozesse oder Laserbehandlung).

Bevorzugt sind als zweite und gegebenenfalls dritte Profilteile z.B. Profile aus gewalztem Edelstahl oder stranggepresste Profile aus Aluminium bzw. aus Aluminiumlegierungen. Diese Profile sind in unterschiedlichen Ausführungen herstellbar und kommerziell erhältlich.

Des Weiteren wird bei dem erfindungsgemäßen Verfahren das erste Kunststoffmaterial für das erste Profilteil und/oder das thermisch plastifizierbare zweite Kunststoffmaterial für den oder die Profilbereiche des ersten Profilteils bevorzugt ausgewählt aus thermoplastischen Polymerwerkstoffen auf der Basis von Polyamiden, Polyimiden, Polyestern, Polyolefinen, insbesondere Polyethylen und Polypropylen, Polyketonen, Vinylpolymeren, insbesondere Polystyrol und Polyvinylchlorid, Polyether, insbesondere Polyphenylenether, Polycarbonat, Polyphenylensulfid und deren Mischformen, insbesondere Polyetherketonen, Polyetheretherketonen und Polyetherimiden, sowie Copolymeren hiervon und Blends der vorgenannten Kunststoffmaterialien. Als erstes Kunststoffmaterial eignen sich auch Elastomere, insbesondere thermoplastische Elastomere.

Insgesamt zeigt sich, dass das erfindungsgemäße Verfahren eine breite Auswahl an Werkstoffen zur Herstellung der Profilteile aus einer Vielzahl an Materialien zulässt, so dass diese spezifisch auf die Anforderungen des jeweiligen Einsatzgebietes der hergestellten Verbundprofile abgestimmt getroffen werden kann.

Darüber hinaus kann erfindungsgemäß das erste und/oder das zweite Kunststoffmaterial Füll- und/oder Verstärkungsstoffe enthalten, welche insbesondere ausgewählt sind aus Glasfasern, Metallfasern, Kohlefasern, Kunststofffasern, Mineralfasern, pflanzlichen Fasern sowie Mischungen hiervon, wobei die Fasern vorzugsweise in Form von Kurzfasern, Langfasern, Endlosfasern, Hohlfasern, Fasergeweben, Fasergelegen und Faserfilzen verwendet werden.

Weitere geeignete Füllstoffe sind beispielsweise glasartige, amorphe, kristalline Zusätze in Form von Pulvern, Kugeln, Hohlkugeln, Aggregaten oder Agglomeraten, insbesondere von Glasmehl, Glaskugeln, Kalk, Kreide, Metalloxiden, Metallhydroxiden, Molekularsieben.

Darüber hinaus lassen sich auch Additive, wie z.B. Flammschutz-/ Brandschutzmittel, Wärme-/Hitze-/UV-/Hydrolyse-Stabilisatoren, Weichmacher, Schlagzähmodifizierer, Treibmittel, Gleit-/Schmiermittel, Farbmittel, Nukleierungsmittel etc., als Füllstoffe verwenden.

Ebenso ist die Verwendung von Schmelzklebstoffen, Schmelzdrähten (monofile und co-extrudierte Varianten), Metalldrähten, Schäumen (geschnittene oder extrudierte Schaumblöcke, Schaumbänder etc.), Metallfolien (beschichtete oder unbeschichtete Folien mit ein- oder mehrlagigem Aufbau) möglich, um Produkte maßgeschneidert funktionalisieren zu können.

Dies ermöglicht eine zusätzliche Anpassung der verwendeten Werkstoffe an die Anforderungen des jeweiligen Einsatzgebiets der erfindungsgemäß hergestellten Verbundprofile.

Besonders bevorzugt sind Kunststoffprofile auf Basis von Polyamid 66 (PA 66), Polyamid 6 (PA6), Polymerblends von PA66 und Polyphenylenether (PPE), Polyethylenterephthalat (PET), Polybutylenterephthalat (PBT), Acrylnitril-Butadien-Styrol-Copolymere (ABS), Acrylnitril-Styrol-Acrylat-Copolymere (ASA), Acrylnitril-Styrol-Copolymere (SAN), Polyacrylate, beispielsweise Polymethylmethacrylat (PMMA), Polyvinylchlorid (PVC), Polypropylen (PP), Polycarbonat (PC), oder Polystyrol (PS) mit einem Anteil an Glasfasern zur Verstärkung.

Gemäß einer weiteren Variante des erfindungsgemäßen Verfahrens wird das erste Profilteil mindestens partiell porös, d.h. geschäumt, oder befüllt mit porösen (offen- oder geschlossenzellig porösen) Füllstoffen ausgebildet. Dies erhöht bei den Verbundprofilen den Wärmedurchgangswiderstand und verringert deren Dichte. Das erste Profilteil kann auch insgesamt porös ausgebildet werden.

Das erfindungsgemäße Verfahren kann so durchgeführt werden, dass die Verfahrensschritte des In-Kontakt-Bringens des oder der Profilbereiche des ersten Profilteils mit dem bzw. den Aufnahmestrukturen des zweiten und gegebenenfalls des dritten Profilteils, das Plastifizieren und das Verformen in einer in Längsrichtung der Profilteile begrenzten Zone (Fügebereich) kontinuierlich oder intermittierend durchgeführt werden. Weist das erste Profilteil zwei Profilbereiche auf, kann nach einer Variante somit der Verbund des ersten Profilteils mit dem zweiten und dem dritten Profilteil zeitgleich hergestellt werden.

Das erfindungsgemäße Verfahren basiert darauf, dass ein Profilbereich des ersten Profilteils als ein sogenanntes Abschmelzelement fungiert und in Kontakt mit einer Aufnahmestruktur des zweiten Profilteils plastifiziert und verformt wird, wobei das erste und das zweite Profilteil nach dem Erstarren des zweiten Kunststoffmaterials mittels eines Formschlusses miteinander verbunden sind.

Bevorzugt wird das Plastifizieren durch Einleitung von Ultraschallschwingungen oder anderer hochfrequenter Energie ("Hochfrequenzschweißen") erreicht, ebenso kann der Eintrag der nötigen Wärmemenge zum Plastifizieren des Profilbereichs (Abschmelzelement) auch durch induktives Erhitzen des zweiten Profilteils erfolgen. Weiterhin ist auch der Energieeintrag durch Kontakterwärmung mit Heizelementen, Erwärmung mit offenen Flammen, Heizgebläsen bzw. Warmgas, Infrarotstrahlung, Laserstrahlung möglich, um das Plastifizieren des zweiten Kunststoffmaterials zu erzielen.

Das erfindungsgemäße Verfahren zur Herstellung des erfindungsgemäßen Verbundprofils wird dabei typischerweise so durchgeführt, dass die ersten und zweiten Profilteile einer Fügeanlage zugeführt werden und in einem Einzugsbereich der Fügeanlage derart zueinander orientiert werden (Ansetzen), dass das jeweilige Abschmelzelement des ersten Profilteils in Kontakt mit der zugeordneten Aufnahmestruktur des zweiten Profilteils kommt.

Die ersten und zweiten Profilteile können in diesem Sinne angesetzt werden, indem beispielsweise ein Profilteil in das andere Profilteil eingeschoben oder eingezogen wird, wie man es aus dem sogenannten Einrollverfahren kennt. Die Aufnahmestruktur ist hierbei typischerweise nutförmig ausgebildet.

Ebenso ist es aber auch möglich, das eine Profilteil auf das andere Profilteil wie einen Deckel aufzusetzen. Das Ansetzen kann dabei durch Zentrier- und Montagehilfen erleichtert werden. Als Montagehilfen können dabei z.B. Funktionselemente seitens des ersten Profilteils in Form von Rastvorrichtungen, beispielsweise Schnapphaken, dienen, um die zunächst lose zusammengeführten

Profilteile schnell und sicher zu positionieren und bis zum fertiggestellten Formschluss als ein Werkstück handhabbar zu gestalten. Zentrierhilfen seitens des ersten Profilteils als weiteres Funktionselement können dabei eine ortsgenaue Positionierung der Profilteile beim Ansetzen unterstützen und ebenso das Erreichen der korrekten Endposition nach der Ausbildung des Formschlusses sicherstellen.

Nach dem Positionieren werden die ersten und zweiten Profilteile nun in ihrer Längsrichtung, die der Längsrichtung des herzustellenden Verbundprofils entspricht, im Folgenden auch Z-Richtung genannt, zu einer in Längsrichtung begrenzten Zone (Fügebereich) transportiert, die sich aus einem Plastifizierabschnitt und einem in Z-Richtung nachfolgenden Halteabschnitt zusammensetzt.

Im Plastifizierabschnitt werden die Profilteile gemäß einer bevorzugten Ausführungsform des erfindungsgemäßen Verfahrens kontinuierlich in Z-Richtung an einem Sonotrodensegment vorbeigeführt.

In dem Sonotrodensegment wird über eine Kontaktfläche einer oder mehrerer Sonotroden, die an einer Oberfläche eines der Profilteile anliegen, neben dem Eintrag von Ultraschall auch ein mechanischer Druck senkrecht zur Z-Richtung auf die beiden Profilteile ausgeübt. Deshalb muss auf der der Sonotrode oder den Sonotroden gegenüberliegenden Seite ein Gegenlager angeordnet sein, um diese Kräfte aufzunehmen. Der mechanische Druck wird dabei bevorzugt von der einen oder den mehreren Sonotroden dadurch erzeugt, dass deren Kontaktflächen unter einem Winkel α gegenüber der Vorschubrichtung Z, entsprechend einer Förderrichtung F, angeordnet sind.

Gegebenenfalls kann ein zusätzlicher mechanischer Druck bzw. Anpressdruck auf die beiden Profilteile neben dem von den Sontrotroden ausgeübten Druck durch zusätzliche Mittel eingeleitet werden, z.B. über Anpressrollen, Bandantriebe, Federelemente und/oder Anpressschienen. Die Geschwindigkeit, mit der dann ein Abschmelzbereich abgeschmolzen wird und die zu fügenden Profilteile in ihre Endkonfiguration senkrecht zur Z-Richtung zusammengeführt werden, ergibt sich dann aus der Vorschubgeschwindigkeit in Z-Richtung und dem Winkel α.

Falls in einer oder mehreren Sonotroden die Kontaktfläche mit unterschiedlichen Winkeln ausgebildet ist, kann man z.B. über ein ganzes Sonotrodensegment einen mittleren Winkel α definieren, der sich aus der Länge gemessen vom Punkt des auf Höhe des ersten Sonotrodenkontaktes bis zum Erreichen der finalen Senkhöhe und der darin realisierten Senkhöhe errechnet. Die Senkhöhe ist dabei die Strecke, um die das erste Profilteil nach dem In-Kontakt-Bringen durch das Plastifizieren (des Abschmelzelements) und Absenken bis zur Endkonfiguration relativ zum zweiten Profilteil abgeschmolzen bzw. abgesenkt wird.

Erfindungsgemäß bevorzugt werden Senkhöhen von ca. 0,3 mm bis ca. 12,0 mm, besonders bevorzugt sind Senkhöhen von ca. 0,5 mm bis ca. 6,5 mm.

Das Fügeverfahren kann dabei insbesondere auch so ausgeführt werden, dass mehrere Sonotrodensegmente zeitgleich in Betrieb sind, um mehrere (versetzte) Formschlüsse in einem Durchlauf zu erzeugen. Damit lassen sich beispielsweise ein erstes Profilteil mit zwei parallel im Abstand zueinander angeordneten Profilbereichen, die Abschmelzzonen bilden, mit zwei zweiten Profilteilen über jeweils einen Formschluss gleichzeitig verbinden.

Ein Sonotrodensegment kann grundsätzlich eine einzelne Sonotrode oder mehrere gemeinsam oder separat angesteuerte, in Längsrichtung Z aneinander gereihte Sonotroden umfassen. Die Sonotroden werden hinsichtlich der Anordnung, Ausrichtung/Verkippung, Dimensionierung, Werkstoffauswahl und des Leistungseintrags so ausgelegt, dass ein vorgegebenes Abschmelzen des Abschmelzelements beim Durchlauf der Profilteile durch den Plastifizierabschnitt erfolgt.

Die Sonotroden leiten hochfrequente Ultraschallschwingungen in die mit einem Formschluss zu verbindenden Profilteile ein. Bevorzugt liegt die Frequenz im Bereich von ca. 16 kHz bis ca. 90 kHz, besonders bevorzugt ist der Frequenzbereich von ca. 19 kHz bis ca. 45 kHz.

Die Sontroden sind bevorzugt statisch verbaut, d.h. beim Plastifizieren tritt nach diesem Verfahren außer der Ultraschallschwingung im Wesentlichen keine weitere Bewegung seitens der Sonotroden auf, insbesondere keine Hebe- und Senkbewegung. Es kann aber vorteilhaft sein, eine nicht-statische Sonotorode im Verfahren zu verwenden, wobei dann die Kontaktfläche der Sonotrode z.B. sowohl in Längsrichtung Z als auch in einer Höhenrichtung Y senkrecht zur Längsrichtung Z bewegt werden kann. Die Möglichkeit der variablen Positionierung der Sonotrodenkontaktfläche kann auch dazu genutzt werden, um bei Wechseln der herzustellenden Produktgeometrie schnelle Anpassungen seitens der Plastifizier-Anlage durchzuführen.

Möglich ist auch die Verwendung von sogenannten mitfahrenden Hub-Stempel-Sonotroden und auch von sogenannten Rollsonotroden. Allerdings werden bevorzugt statische Sonotroden mit schleifendem Kontakt zu einem der Profilteile im erfindungsgemäßen Verfahren genutzt (Schleifsonotrode).

Die Durchführung eines kontinuierlichen Durchlauf-Verfahrens vermeidet insbesondere das Problem von Versatzstellen, welche sich z.B. in einem getakteten Vorschub-Verfahren mit getaktet bewegten Sonotroden oder getaktet bewegten Pressen ergibt.

Die Sonotrode(n) wird/werden entweder mit einer definierten Anpresskraft (Kraftsteuerung) oder mit auf einer bestimmten Kontur oder einem bestimmten Ort ("Fahren auf Endanschlag", Wegsteuerung) in der erforderlichen Position zu den Profilteilen platziert.

Bevorzugt steht dabei die Sonotrode bezogen auf den Querschnitt im Wesentlichen senkrecht auf der zu fügenden Komponente an, damit die Energie (Ultraschall-Schwingungen) ideal eingeleitet werden können und auftretende mechanische Kräfte direkt abgeleitet werden. Es kann aber erforderlich sein, dass aufgrund geometrischer Restriktionen seitens der Profilteile eine senkrechte Platzierung der Sonotrode(n) nicht möglich ist, in diesem Fall können auch in sich abgewinkelte Sonotroden oder Sonotroden mit abgewinkelten Kontaktflächen oder mit konturierten Kontaktflächen verwendet werden, wobei dann die Kontaktfläche der Sonotrode im Querschnitt senkrecht zur Transportrichtung eine zur Profiloberfläche passende Kontur aufweisen sollte.

Die Sonotroden, speziell die schleifenden Sonotroden, werden bevorzugt aus reibverschleißarmen metallischen Werkstoffen gefertigt (z.B. aus hartem oder gehärtetem Stahl, Titan und entsprechende Hartlegierungen) oder mit reibverschleißfesten Beschichtungen auf der Kontaktfläche ausgerüstet. Solche verschleißfesten Beschichtungen können u.a. übliche Hartbeschichtungen aus PVD/CVD-(physical/chemical vapour deposition)Verfahren oder gehärtete nasschemische Beschichtungen (z.B. keramische Beschichtungen) sein. Im Werkzeugbau sind derartige Verfahren und Beschichtungen ausreichend bekannt und verfügbar. Besonders bevorzugt sind kohlenstoffbasierte Beschichtungen, z.B. sogenannte diamond-like-carbon Beschichtungen, sowie oxidische, nitridische oder carbidische-Beschichtungen.

Die Sonotroden können kontinuierlich betrieben werden oder in kurzen Takten, z.B. in Sekundenbruchteilen, gepulst oder in längeren Zyklen von einigen Sekunden oder Minuten. Bevorzugt sind die Sonotroden während des Durchlaufs der Profilteile im Regelfall kontinuierlich im Betrieb. Durch den hohen Energieeintrag müssen Maßnahmen zum Abführen überschüssiger Wärme getroffen werden, z.B. das Kühlen der Sonotroden mit Luft, Wasser oder anderen Medien, sowie das Ausrüsten von Oberflächen mit Beschichtungen mit hohem Emissionsgrad zur Verbesserung der Wärmeabstrahlung.

Das Plastifizierverhalten des zweiten Kunststoffmaterials kann durch verschiedene Parameter gesteuert werden, dies sind u.a. die Auslegung der Profilgeometrien des ersten Profilteils (Wandstärken, Profil-Formen, Auslegung des Abschmelzbereiches) und der zugeordneten Aufnahmestruktur, der Senkhöhe, der Durchschalltiefe und anderem. Ebenso sind die Auswahl der Werkstoffe für den Profilbereich des ersten Profilteils (Steifigkeit, E-Module, Schmelztemperatur, Erweichungstemperatur, Glasübergangstemperatur, Werkstoffdichten, Verlustfaktoren für die jeweilig eingebrachte Energie etc.) und die Fügeparameter (Vortriebsgeschwindigkeit, Senkgeschwindigkeit, Energieeintrag, Frequenz/Amplitude der Ultraschall-Sonotrode, Vorwärmung des ersten Profilteils und/oder des zweiten Profilteils) von Bedeutung.

Das Plastifizierverhalten des zweiten Kunststoffmaterials kann auch beeinflusst werden durch das zweite Profilteil bzw. durch den Werkstoff des zweiten Profilteils. Nachteilig für das Plastifizierverhalten wirken sich z.B. einfach mitschwingende oder rückfedernde Profilgeometrien des zweiten Profilteils aus. Diese Nachteile lassen sich aber durch konstruktive Merkmale beseitigen (Aufdicken der Wandstärken im Bereich der Aufnahmestruktur, Unterstützen der Aufnahmestruktur durch Kraft-ableitende Stege etc.).

Nach dem Plastifizierabschnitt ist ein Halteabschnitt angeordnet, in dem die ggf. noch heiße, plastifizierte Masse des zweiten Kunststoffmaterials des Abschmelzbereichs nach dem Verformen kontrolliert erkalten und erstarren kann. Die Profilteile werden in diesem Bereich des Halteabschnitts in der gewünschten Relativposition zueinander gehalten und ggf. in Längsrichtung weitergeführt. Ebenso ist es aber möglich, die Profile quer zu fördern. Dabei kann, falls nötig, auch mechanischer Druck eingebracht werden, z.B. durch Anpressrollen, Walzen, schleifende Anpressschienen, Haltematrizen oder -ketten- oder bandangetriebene Anpresselemente (Bandabzug). Das Erkalten geschieht in der Regel zügig, durch die Ableitung der Wärme durch das Material des ersten und insbesondere des zweiten Profilteils, wenn dieses aus einem metallischen Material gefertigt ist. Bei Bedarf kann ein Wärmeüberschuss auch durch Kühlung, beispielsweise mittels Luft, Wasser, Öl oder anderen Medien abgeführt werden. Nach dem Durchlaufen des Fügebereiches ist die formschlüssige Verbindung zwischen den Profilteilen ausgebildet und das Verbundprofil wird in einen Auslassbereich weitertransportiert, wo eine Entnahme des Profils erfolgen kann oder gegebenenfalls sukzessive weitere Verarbeitungsschritte (Bündeln, Folieren, Verpacken, Signieren, Reinigen, Vorbehandeln, Beschichten etc.) erfolgen können.

Ebenso ist es möglich, die Sonotrode in Kontakt mit dem zweiten Profilteil anzusetzen, um durch das Material des zweiten Profilteils (z.B. Metall) hindurch in den Werkstoff (zweites Kunststoffmaterial) des Profilbereichs des ersten Profilteils Energie derart einzutragen, dass das Plastifizieren des zweiten Kunststoffmaterials möglich und die Ausbildung eines Formschlusses erreicht wird. Dies ist besonders bevorzugt, wenn das Material des zweiten Profilteils eine höhere Steifigkeit aufweist als das Material des ersten Profilteils, z.B. eine zweimal höhere Steifigkeit (messbar als E-Modul, z.B. bei Aluminium oder Edelstahl) ist und/oder der Ultraschall möglichst geradlinig vom Bereich der Schall-Einleitung zur Aufnahmestruktur geführt werden kann und/oder diese Schall-leitenden Profilstrukturen des zweiten Profilteils dickwandig, z.B. mit Wandstärken von ca. 2 mm oder mehr ausgeführt werden.

Gemäß dem erfindungsgemäßen Verfahren wird/werden der Formschluss bzw. die Formschlüsse bevorzugt mit einer Schubfestigkeit in Längsrichtung des Verbundprofils von ca. 2 N/mm oder mehr, besonders bevorzugt mit ca. 5 N/mm oder mehr hergestellt. Die Schubfestigkeit von Verbundprofilen (Metallprofile mit thermischer Trennung) kann entsprechend DIN EN 14024:2004 ermittelt werden.

Das erfindungsgemäße Verfahren erlaubt insbesondere in jeglicher Kombination, dass das erste und/oder das zweite Profilteil und/oder das dritte Profilteil als Endlosmaterial oder als Stangenware bereitgestellt werden.

Ferner kann/können gemäß dem erfindungsgemäßen Verfahren das zweite Profilteil und/oder das dritte Profilteil mit einer Aufnahmestruktur in Form einer Ausnehmung bereitgestellt werden, welche, im Querschnitt senkrecht zur Längsrichtung des Verbundprofils gesehen, zumindest abschnittsweise einen Hinterschnitt aufweist.

Auch kann gemäß dem erfindungsgemäßen Verfahren der Querschnitt der Aufnahmestruktur des zweiten Profilteils und/oder des dritten Profilteils, senkrecht zur Längsrichtung des Verbundprofils gesehen, entlang der Längsrichtung in seiner Breite und/oder Tiefe variieren, z.B. durch Druckumformen von Bereichen der zweiten/dritten Profilteile.

Die Erzeugung besonderer Querschnittsgeometrien der zweiten und/oder dritten Profilteile kann im Prozessablauf, also dem Fügeprozess vorgeschaltet oder in einem separaten vorher durchgeführten Prozess geschehen.

Des Weiteren können gemäß dem erfindungsgemäßen Verfahren das erste Profilteil und das zweite sowie gegebenenfalls das dritte Profilteil vor dem Plastifizieren des Profilbereichs oder der Profilbereiche mittels einer ersten Führungsvorrichtung in einer vorgegebenen, gegebenenfalls veränderlichen Relativposition zueinander positioniert und in der Längsrichtung des Verbundprofils geführt werden.

Bei einer weiteren Variante des erfindungsgemäßen Verfahrens können das erste Profilteil und das zweite sowie gegebenenfalls das dritte Profilteil nach dem Plastifizieren und Verformen des Profilbereichs oder der Profilbereiche mittels einer zweiten Führungsvorrichtung in einer vorgegebenen, gegebenenfalls veränderlichen Relativposition zueinander positioniert und in der Längsrichtung geführt werden, um beispielsweise eine vorgegebene Senkhöhe zu erreichen, zu halten oder gegebenenfalls zu korrigieren.

Auch können gemäß dem erfindungsgemäßen Verfahren das erste Profilteil und das zweite sowie gegebenenfalls das dritte Profilteil nach dem Plastifizieren und Verformen des Profilbereichs oder der Profilbereiche und beim Durchlaufen einer optionalen zweiten Führungsvorrichtung im Anschluss an das Plastifizieren und Verformen des oder der Profilbereiche mit einer vorgegebenen Kraft gegeneinander gepresst und danach in derselben oder einer weiteren vorgegebenen Relativposition bis zum Erstarren des plastifizierten zweiten Kunststoffmaterials gehalten werden.

Gemäß einer weiteren Variante des erfindungsgemäßen Verfahrens können das erste Profilteil und das zweite sowie gegebenenfalls das dritte Profilteil nach dem Plastifizieren und Verformen des Profilbereichs oder der Profilbereiche und beim Durchlaufen einer optionalen zweiten Führungsvorrichtung im Anschluss an das Plastifizieren und Verformen des oder der Profilbereiche in einer vorgegebenen Relativposition gegeneinander gepresst und danach in derselben oder einer weiteren vorgegebenen Relativposition bis zum Erstarren des plastifizierten zweiten Kunststoffmaterials gehalten werden.

Vorzugsweise wird/werden gemäß dem erfindungsgemäßen Verfahren der Profilbereich oder die Profilbereiche des ersten Profilteils als Vorsprung bzw. Vorsprünge ausgebildet, welche(r) sich von einer Oberfläche des ersten Profilteils um ca. 10 mm oder weniger, bevorzugt ca. 6 mm oder weniger, weg erstrecken. Damit kann eine ausreichend große Masse an zweitem Kunststoffmaterial bereitgehalten werden, um auch Formschlüsse für die Aufnahme großer Kräfte (Zug, Schub, Biegung etc.) erzeugen zu können. Ebenfalls sind kürzere Vorsprünge bevorzugt, da sich diese besser durchschallen lassen und somit das Plastifizieren einfacher gelingt.

Bevorzugt werden bei dem erfindungsgemäßen Verfahren das erste Profilteil und das zweite Profilteil, gegebenenfalls zusammen mit dem dritten Profilteil, einander unter einem spitzen Winkel bezüglich der Längsrichtung des Verbundprofils zugeführt, wobei sich die Führung unter einem spitzen Winkel zumindest über Teilbereiche der Zone der Plastifizierung und Verformung und gegebenenfalls in der ersten und/oder zweiten Führungsvorrichtung erstreckt.

Weiter wird bevorzugt bei dem erfindungsgemäßen Verfahren das Plastifizieren durch Ultraschalleintrag, bevorzugt im sogenannten Nahfeld-Verfahren, durchgeführt, wobei dabei eine Sonotrode einen direkten Kontakt zu einem der Profilteile aufweist. Vorzugsweise ist dabei ein Abstand der Kontaktfläche der Sonotrode zum jeweils anderen Profilteil von ca. 10 mm oder weniger, weiter bevorzugt von ca. 6 mm oder weniger, gegeben.

Bei bevorzugten erfindungsgemäßen Verfahren weist die Zone für das Plastifizieren, in Längsrichtung des Verbundprofils gemessen, eine Länge von ca. 5 cm bis ca. 100 cm, bevorzugt eine Länge von ca. 5 cm bis ca. 50 cm, auf, wobei gegebenenfalls eine Ultraschalleinheit mit einer oder mehreren Sonotroden für das Plastifizieren verwendet wird.

Weiter bevorzugt wird/werden bei dem erfindungsgemäßen Verfahren die Kontaktfläche(n) der Sonotrode(n) in der Zone des Plastifizierens und Verformens, bezogen auf die Längsrichtung des bzw. der mit der oder den Sonotrode(n) in Kontakt stehenden Profilteils/Profilteile, einen Abstand zu einer Oberfläche des anderen Profilteils bzw. der anderen Profilteile des Verbundprofils aufweisen, der sich entlang der Längsrichtung des Verbundprofils, in Durchlaufrichtung gesehen, vermindert (Senkhöhe).

Dabei wird/werden bevorzugt die Kontaktfläche(n) in einer Winkelposition oder in unterschiedlichen Winkelpositionen angeordnet, wobei die Winkelpositionen kontinuierlich und/oder stufenweise variieren können.

Bei dem erfindungsgemäßen Verfahren wird als in der Zone des Plastifizierens und Verformens zu verwendende Sonotrode bevorzugt eine statische Sonotrode ausgewählt, welche insbesondere als Schleifsonotrode ausgebildet ist. Das bedeutet, dass ein Profilteil an der Kontaktfläche der ortsfesten oder stehenden Sonotrode entlangschleift, während die Sonotrode mit einer Ultraschallfrequenz schwingt.

Bevorzugt wird bei dem erfindungsgemäßen Verfahren das erzeugte Verbundprofil mit einer Geschwindigkeit von ca. 3 m/min oder mehr, insbesondere ca. 10 m/min oder mehr, in Längsrichtung des Verbundprofils gesehen, gefördert.

Bei dem erfindungsgemäßen Verfahren beträgt die Verweildauer der Profilteile in der Zone des Plastifizierens und Verformens bevorzugt ca. 0,1 sec bis ca. 10 sec, weiter bevorzugt ca. 0,2 sec bis ca. 5 sec.

Bei dem erfindungsgemäßen Verfahren wird die Sonotrode vorzugsweise kontinuierlich betrieben.

Die vorliegende Erfindung betrifft des Weiteren ein Verbundprofil, hergestellt nach dem erfindungsgemäßem Verfahren.

Bei dem erfindungsgemäßen Verbundprofil weist das erste Profilteil insbesondere ein oder mehrere Funktionselemente auf. Mit Hilfe der Funktionselemente lassen sich die Verbundprofile in einfacher Weise an eine Vielzahl von Anforderungen und Aufgabenstellungen anpassen.

Häufig wird das erfindungsgemäße Verbundprofil ein zweites Profilteil umfassen, welches eine Sichtseitenoberfläche aufweist, an der die Aufnahmestruktur ausgebildet ist.

Hier kann dann das erste Profilteil mit einem Flächenbereich nach Ausbildung des Formschlusses fluchtend mit der Sichtseitenoberfläche angeordnet sein.

Bei bevorzugten erfindungsgemäßen Verbundprofilen überdeckt das erste Profilteil nach Ausbildung des Formschlusses den Bereich des zweiten Profilteils, an dem die Aufnahmestruktur ausgebildet ist, im Wesentlichen vollständig. Dadurch lassen sich besonders ansprechende Sicht-Oberflächen von Verbundprofilen erzielen. Im Vergleich zu herkömmlichen Einrollprofilen kann man in bevorzugten Ausführungsformen von außen betrachtet kaum oder keine direkten Hinweise auf die darunter verborgene Verbindungsstruktur/Geometrie finden.

Bevorzugte erfindungsgemäße Verbundprofile weisen eine Sichtseitenoberfläche auf, welche von der Sichtseitenoberfläche des zweiten Profilteils, einem mit der Sichtseitenoberfläche des zweiten Profilteils fluchtend angeordneten Flächenbereich des ersten Profilteils sowie gegebenenfalls einer Sichtseitenoberfläche eines dritten Profilteils gebildet wird, wobei vorzugsweise die Sichtseitenoberfläche des dritten Profilteils fluchtend mit dem Flächenbereich des ersten Profilteils angeordnet ist.

Die verwendeten Profilteile, soweit sie als Kunststoffprofile bereitgestellt werden, werden bevorzugt in einem Extrusionsverfahren hergestellt. Daneben können aber auch gepresste, kalandrierte, pultrudierte, oder anders hergestellte strangförmige Profilteile verwendet werden. Besonders bevorzugt sind gewebeverstärkte oder endlosfaserverstärkte thermoplastische Compositwerkstoffe, sogenannte Prepregs, Organotapes, Organobleche oder allgemein Composites in langen Bahnen oder Streifen. Diese Materialien können in der Zusammensetzung und Geometrie unterschiedlich ausgestaltet werden bzw. lassen sich auch gut zu gewünschten Geometrien des jeweiligen Profilteils umformen ("Thermoformen"). Bei Bedarf können weitere Komponenten nachträglich angebracht bzw. angeformt werden.

Die in dem erfindungsgemäßen Verfahren verwendeten Profilteile können im Gegensatz zu üblichen Einrollprofilen aus dem Stand der Technik andere Formen aufweisen, die insbesondere bessere mechanische, aber auch bessere optische Eigenschaften aufweisen. Ebenso können die gebildeten Verbundprofile neue, bisher nicht zugängliche Querschnittsgeometrien aufweisen.

Auch wenn in vielen Einsatzbereichen lineare Verbundprofile gewünscht oder erforderlich sind, kann in manchen Anwendungen eine Ausführung von gebogenen oder in sich verwundenen Verbundprofilgeometrien gewünscht oder erforderlich sein. Eine Anpassung des erfindungsgemäßen Verfahrens erlaubt es, entsprechende Biegeradien (zur Herstellung von in Längsrichtung gebogenen oder im Extremfall zu Ringen oder Schnecken geformten Verbundprofilen) oder Drall- bzw. Torsionswinkel (zur Herstellung von in Längsrichtung schraubenförmig verwundener Verbundprofile) einzustellen.

Bevorzugt werden die Verbundprofile so konzipiert, dass die Senkhöhe gering ausfällt, z.B. kleiner als ca. 10 mm, bevorzugt kleiner als ca. 6 mm, weiter bevorzugt kleiner als ca. 3 mm.

Ebenso werden in erfindungsgemäßen Verbundprofilen die Profilteile bevorzugt so konstruiert, dass die Strecke zwischen einer potentiellen Kontaktfläche der Sonotrode mit dem ersten Profilteil und dem abgewandten Ende des zugehörigen Profilbereichs (Abschmelzbereichs) des ersten Profilteils gering ausfällt (geringe Durchschalltiefe), nämlich bevorzugt kleiner als ca. 20 mm, weiter bevorzugt, kleiner als ca. 10 mm, am meisten bevorzugt kleiner als ca. 6 mm.

Das erste Profilteil, insbesondere in Form eines Isolierprofils, kann selbst in unterschiedlichen Formen ausgestaltet sein und neben den Profilbereichen aus dem zweiten Kunststoffmaterial (Abschmelzbereiche) eine Vielzahl weiterer Funktionszonen bzw. Funktionselemente aufweisen, die aus dem Stand der Technik für die jeweilige Zielanwendung bekannt sind, z.B. Fahnen und/oder Hohlkammern zur Reduktion von Konvektion, Schraubkanäle, Nuten, Haken, z.B. zur Aufnahme von Dichtungen oder metallischen Elementen, Anschläge in Form von Nasen, Pfeilen, Zentrier- und Montagehilfen, spezielle Vorsprünge zur Aufnahme von Querzugkräften usw.

Die Profilbereiche des ersten Profilteils (Abschmelzbereiche) können ebenfalls in unterschiedlichen Formen ausgestaltet sein. Bevorzugt sind symmetrische oder asymmetrische Querschnitte mit mindestens einer Verjüngung, z.B. angespitzte, abgerundete Formen mit einer oder mehreren Spitzen oder endständigen Rundungen. Ebenso können aber auch stumpfe Abschmelzbereiche eingesetzt werden. Weiter ist es auch möglich, eine Verjüngung, z.B. in Form einer Taillierung, in einen Abschmelzbereich einzubringen. Die Verjüngung hat hierbei den Zweck, die Ultraschall-Energie zu konzentrieren und einen Bereich vorzugeben, in dem der Plastifiziervorgang beginnt, wobei dieser Bereich dann innerhalb des Abschmelzelements liegt und dadurch vorerst (bis zum Verformen) noch keinen Kontakt zur Aufnahmestruktur bzw. dem Werkstoff der Aufnahmestruktur hat.

Zugeordnet zu einem Abschmelzbereich des ersten Profilteils wird jeweils eine Aufnahmestruktur auf Seiten der zweiten Profilteile bereitgestellt. Diese Aufnahmestruktur nimmt den Abschmelzbereich des ersten Profilteils auf und stellt ein Volumen für das plastifizierte zweite Kunststoffmaterial des Abschmelzbereiches zur Verfügung. Ebenso ist die Aufnahmestruktur derart ausgestaltet, dass eine formschlüssige Verbindung möglich wird, z.B. durch hinterschnittene Bereiche.

Bevorzugt ist die Aufnahmestruktur als durchgängige Nut mit einem Hinterschnitt ausgebildet, so dass im Querschnitt senkrecht zur Längsrichtung des Verbundprofils eine Art in Längsrichtung verlaufendes Aufnahmevolumen entsteht. Diese Nut kann im Querschnitt senkrecht zur Längsrichtung sowohl symmetrisch als auch asymmetrisch sein und sich z.B. im Querschnitt verjüngen oder aufweiten. Ebenso kann diese Nut ein sich zur Nutöffnung hin verjüngendes Element, z.B. in Form eines dreieckförmigen Querschnitts, enthalten, welches dann als sogenannter Energierichtungsgeber im Ultraschall-Schweißverfahren fungieren kann und sowohl die Ultraschallenergie in der Spitze konzentriert und gleichzeitig die plastifizierte Masse entlang der Dreiecksflanke ableitet.

Die Nut wird bezüglich ihrer Querschnittsgeometrie so ausgestaltet, dass sie das anfallende Schmelzevolumen des Profilbereichs (Abschmelzelement) des ersten Profilteils vollständig aufnehmen kann. Gegebenenfalls kann das von der Nut bereitgestellte Volumen etwas größer als das anfallende Schmelzevolumen ausgebildet werden (Puffer). Ein Puffer kann dabei vorteilhaft sein, um eine mögliche Abweichung des Schmelzevolumens zu kompensieren, welche sich aus geometrischen Variationen, Schwankungen im Plastifizierprozess etc. ergeben kann.

Die Nut selbst kann auch so ausgestaltet werden, dass sich der Profilbereich (Abschmelzbereich) selbst zentriert.

In einer weiteren Variante des erfindungsgemäßen Verfahrens kann ein Verbundprofil aus zwei Profilen vom Typ des ersten Profilteils und zwei Profilen vom Typ des zweiten Profilteils mit sehr guter Profilstatik hergestellt werden, indem zusätzlich zum formschlüssigen Verbinden der ersten und zweiten Profilteile zusätzlich ein stoffschlüssiges Fügen (z.B. Verkleben oder Verschweißen) der beiden ersten Profilteile erfolgt. Dieser Prozess kann ebenfalls in einer direkten Prozessabfolge mit dem Herstellen des Formschlusses kombiniert werden.

Bevorzugt kann in der Aufnahmestruktur und/oder auf oder an dem Abschmelzbereich ein Klebstoff z.B. ein Schmelzklebstoff oder ein Schmelzdraht mit Schmelzklebstoffanteilen aufgebracht sein.

Ein separater Klebstoff muss aber nicht zwingend im Bereich der Aufnahmestruktur eingebracht sein, sondern kann auch in danebenliegenden Bereichen aufgetragen werden, wobei der Klebstoff Kontakt zu dem ersten und dem zweiten Profilteil aufweisen sollte. Derartige Klebstoffe können dann ggf. erst in einem späteren Prozessschritt (z.B. durch das Pulverlack-Einbrennen) thermisch aktiviert werden.

Erfindungsgemäß hergestellte Verbundprofile weisen dabei eine Vielzahl von Vorteilen auf:
Erfindungsgemäße Verbundprofile können ohne Rändeln eines Aluminiumprofils hergestellt werden. Alternative Möglichkeiten zur Steigerung der Festigkeiten und insbesondere der Verschubfestigkeit lassen sich - falls nötig - durch die Optimierung der Geometrie der Aufnahmestruktur, eine zusätzliche Verwendung von (Schmelz-)Klebstoffen, den Einsatz von Reibung-steigernden Mitteln (scharfkantige Partikel, z.B. Sand, Korund etc.) in dem Formschlussbereich erreichen.
Erfindungsgemäße Verbundprofile erzielen eine bessere Wärmedämmung, ohne dass dazu eine Veränderung der Hauptabmessungen, insbesondere der Bautiefe L_{b}, des Verbundprofils nötig wäre. Eine Erhöhung der sogenannten Isolationstiefe Lᵢ verbessert die sogenannten Uf-Werte. Bei gleichen Uf-Werten kann man erfindungsgemäße Verbundprofile mit einem kleiner dimensionierten Querschnitt realisieren.

Die Designfreiheit erfindungsgemäßer Verbundprofile ist merklich erhöht, und insbesondere lassen sich Verbundprofile mit glatten Sichtflächen realisieren. Die auffällige und auch unschöne Positionierung der Rändelspuren in Sichtbereichen, wie dies z.T. beim Einrollverfahren notwendig ist, kann vermieden werden.

Übliche Funktionselemente, wie z.B. Fahnen, Hohlkammern, Nasen, Haken, Anschläge, Nuten etc., können problemlos in die Struktur der erfindungsgemäßen Verbundprofile integriert werden. Die Kombinierbarkeit mit bekannten Konfektionsschritten, z.B. dem Folieren mit metallisierten oder metallischen Folien, dem Aufbringen von Schäumen, z.B. aufgeklebten Kunststoff-Schäumen (PE, PP, PET, PS, PA, PU etc.) oder reaktiven Dämmschäumen (PUR), Abdeckfolien bzw. Kratzschutzfolien usw., ist ebenfalls gegeben.

Relevante Verbundkenndaten können verbessert werden: Die Verschubfestigkeiten können durch den guten Formschluss gesteigert werden. Die Querzugfestigkeiten der Verbundprofile können gesteigert werden, da z.B. geringere oder keine Kröpfungswinkel in die als Isolierprofile ausgelegten ersten Profilteile konstruktiv intergriert werden müssen.

Die Torsionssteifigkeit kann verbessert werden, da außen an den zweiten Profilteilen anliegende erste Profilteile in Form von Isolierprofilen das Flächenträgheitsmoment erhöhen.

Hinterschnitte in Metallprofilen, die als zweites Profilteil zum Einsatz kommen, können massiver ausgeführt werden, da die Notwendigkeit eines Einrollhammers, der kalt umformbar sein muss, entfällt. Somit können festere Verbindungen konzipiert werden.

Die Funktion der Ausbildung eines Formschlusses kann von weiteren zu berücksichtigenden mechanischen Funktionen, z.B. der Aufnahme von Querzugkräften, entkoppelt werden. Dadurch lassen sich die unterschiedlichen Funktionen des Verbundprofils einfacher und zumindest partiell unabhängig voneinander optimieren.

Es ist eine vereinfachte Herstellung der Aluminium-Strangpressprofile denkbar, da einfachere Querschnitte möglich sind (relativ dünnwandige und komplizierte Strukturen im Bereich Einrollgeometrie (Hammer und Amboss).

Dadurch wird der Prozess der Ausbildung des Formschlusses besser kontrollierbar und der Anteil an Ausschussware reduziert.

Der Formschluss kann mit hohen Produktionsgeschwindigkeiten erzeugt werden.

Ein verzugsfreies Verbinden der Profile wird möglich, da eine Kaltverformung des Metalls entfällt.

Die Dichtheit der Verbindungszone von erstem und zweitem Profilteil ist verbessert und somit eine Erhöhung der Schlagregendichtheit erzielbar.

Da die Isolierprofile nicht mehr zwingend in Längsrichtung in die Metallprofile eingeschoben werden müssen, sondern wie ein Deckel aufgelegt werden können, ist die Zugänglichkeit zu einem Hohlraum im Verbundprofil einfach über die gesamte Profillänge möglich. Dadurch kann man z.B. einfacher zusätzliche Produktbestandteile in den Hohlraum einbringen, z.B. um den Brandschutz, Schallschutz, das thermische Isolationsverhalten oder die Profilstatik zu verbessern. Darunter fallen u.a. das Einlegen von Schaumleisten, Dämmmaterial, Verstärkungsstreben oder -profilen, Klammern aus Metallen oder Kunststoffwerkstoffen, das Einfüllen von reaktiven Schaummassen etc.

Durch den Schweißprozess kann nicht nur das Kunststoffprofil (erstes Profilteil) fest mit dem Aluminium-Profil (zweites Profilteil) verbunden werden, sondern zusätzlich auch gegebenenfalls mehrere Kunststoffprofile untereinander. Somit lassen sich im gleichen Fertigungsprozess quer verstrebte Profile mit einer verbesserten Statik des Verbundprofils herstellen.

Die Verwendung von flachen, bahnförmigen Compositwerkstoffen wie z.B. sogenannten Organotapes oder Organoblechen in Form von Streifen als alternative Ausgangsware für Kunststoffprofile (erste Profilteile) ist möglich. Dies eröffnet den Weg zu leistungsfähigeren Verbundprofilen. Die nötigen Profilbereiche können auf diese Flachmaterialien einfach aufgebracht werden, z.B. nachträglich durch entsprechendes Umformen oder durch Anformen (Anspritzen, Aufschweißen etc.) von Funktionszonen aus kompatiblen Kunststoffwerkstoffen.

Die Kunststoffprofile (erste Profilteile) in erfindungsgemäßen Verbundprofilen können bei gleichbleibender Größe des Querschnitts des Verbundprofils (verglichen mit klassischen Einrollverbundprofilen) größer ausgelegt werden, und damit kann eine größere Isoliertiefe erzielt werden. Ebenso können bei gleicher Isoliertiefe die erfindungsgemäßen Verbundprofile mit einem kleineren Querschnitt ausgebildet werden als bei entsprechenden Einrollverbundprofilen. Somit lassen sich filigranere und/oder besser isolierende Fenster-/Tür-/Fassadensysteme bauen.

Erfindungsgemäß hergestellte Verbundprofile können einfach erkannt werden, indem ein Prüfmuster einem längeren Verbundprofil entnommen wird und weitere relevante Merkmale bestätigt werden. Durch eine optische, besser eine mikroskopische Analyse geeigneter Schnitte kann ein Fachmann das Zustandekommen der formschlüssigen Verbindung auf das Plastifizieren des Kunststoffes zurückführen. Querschnitte lassen sich entweder mit einem sauber ausgeführten Sägeschnitt oder besser noch als Schliffbild von in Harz eingebetteten Prüfmustern anfertigen. Ein Fachmann für Fügetechnik wird darüber hinaus weitere charakteristische Merkmale dem Verfahren zuordnen können.

Diese und weitere Vorteile der Erfindung werden im Folgenden anhand der Zeichnung noch näher erläutert. Es zeigen im Einzelnen:
- Figur 1:: ein herkömmliches Verbundprofil mit im Einrollver-fahren zu verbindenden Profilteilen;
- Figur 2A:: ein erfindungsgemäß zu verwendendes erstes Profilteil;
- Figur 2B:: zwei erste Profilteile der Figur 2A positioniert zwischen zwei weiteren zweiten Profilteilen, schematisch dargestellt in einer Vorrichtung zur formschlüssigen Verbindung;
- Figur 2C:: fertig hergestelltes erfindungsgemäßes Verbundprofil;
- Figur 3A:: ein erfindungsgemäß zu verwendendes erstes Profilteil;
- Figur 3B:: das erste Profilteil der Figur 3A positioniert im Verbund mit zwei weiteren zweiten Profilteilen, schematisch dargestellt in einer Vorrichtung zur formschlüssigen Verbindung;
- Figur 3C:: fertig hergestelltes erfindungsgemäßes Verbundprofil;
- Figuren 4A bis 4D:: eine Sequenz des Zusammenführens und der Bildung des Formschlusses entsprechend der vorliegenden Erfindung bei einem Verbundprofil gemäß der Figur 5A;
- Figur 5A:: ein erfindungsgemäßes Verbundprofil mit einer weiteren Variante des Formschlusses zwischen den ersten und zweiten Profilteilen;
- Figuren 5B und 5C:: einen vergrößerten Ausschnitt aus Figur 5A vor bzw. nach Ausbildung eines Formschlusses;
- Figur 5D:: eine Lichtmikroskopaufnahme eines Sägeschnitts eines erfindungsgemäß hergestellten Formschlusses eines Verbundprofils gemäß Figur 5A;
- Figur 6:: eine weitere Variante eines erfindungsgemäßen Verbundprofils;
- Figuren 7A bis 7C:: verschiedene Varianten eines ersten Profilteils zur Herstellung eines erfindungsgemäßen Verbundprofils;
- Figur 8:: eine weitere Variante eines erfindungsgemäßen Verbundprofils;
- Figuren 9A bis 9D:: unterschiedliche Stadien in der Herstellung eines erfindungsgemäßen Verbundprofils gemäß einer weiteren Variante;
- Figuren 10A bis 10H:: erste Profilteile für ein erfindungsgemäßes Verbundprofil sowie deren Profilbereiche in mehreren Variationen;
- Figur 11A:: eine weitere Variante eines ersten Profilteils zur Herstellung eines Verbundprofils;
- Figuren 11B und 11C:: unterschiedliche Stadien der Herstellung eines Verbundprofils bei Verwendung eines ersten Profilteils gemäß Figur 11A;
- Figuren 12A bis 12G:: ein zweites Profilteil mit einer Aufnahmestruktur in mehreren Variationen;
- Figuren 13A bis 13C:: weitere Variationen von Aufnahmestrukturen von zweiten Profilteilen gemäß der vorliegenden Erfindung;
- Figuren 13D bis 13F:: eine weitere Variation einer Aufnahmestruktur in unterschiedlichen Ansichten;
- Figur 14:: eine erste Variante einer Vorrichtung zur Herstellung eines erfindungsgemäßen Verbundprofils;
- Figuren 15A und B:: zwei weitere Varianten einer Vorrichtung zur Herstellung eines erfindungsgemäßen Verbundprofils;
- Figur 16:: eine weitere Variante einer Vorrichtung zur Herstellung eines erfindungsgemäßen Verbundprofils;
- Figur 17:: eine weitere Variante einer Vorrichtung zur Herstellung eines erfindungsgemäßen Verbundprofils;
- Figuren 18A und 18B:: eine weitere Variante einer Vorrichtung zur Herstellung eines erfindungsgemäßen Verbundprofils in dreidimensionaler Darstellung und in Draufsicht; und
- Figuren 19A bis 19D:: eine weitere Variante eines erfindungsgemäßen Verbundprofils mit modifizierten Aufnahmestrukturen wie im Detail in den Figuren 19B und 19D gezeigt.

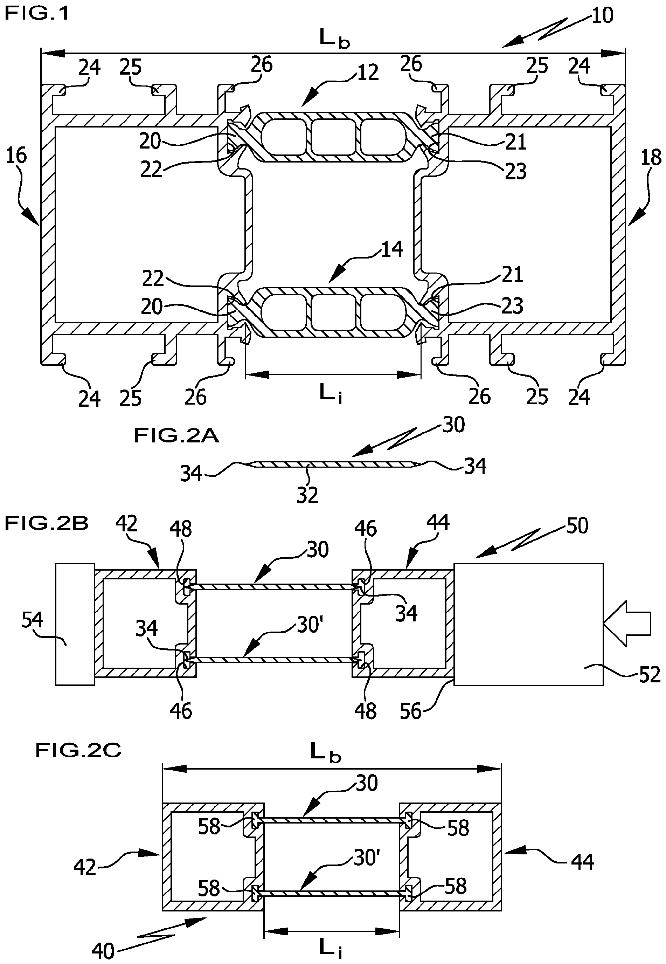

Figur 1 zeigt im Querschnitt ein herkömmliches Verbundprofil 10, wie es insbesondere bei der Herstellung von Fenster- oder Türrahmen zum Einsatz kommt.

Das Verbundprofil 10 weist zwei Kunststoffprofile 12, 14 auf, welche zwischen zwei Metallprofilen 16, 18 angeordnet sind und diese auf einem vorgegebenen Abstand Lᵢ (Isolationstiefe) halten. Die Breite (Bautiefe) des Verbundprofils 10 ist in Figur 1 mit dem Symbol L_{b} bezeichnet. Der Abstand Lᵢ wird hierbei bestimmt ab dem letzten Berührungspunkt des höher wärmeleitenden Werkstoffes (hier Metall) und dem wärmeisolierenden Werkstoff (hier Kunststoff).

Die beiden Kunststoffprofile 12, 14 sind als Hohlkammerprofile ausgebildet und weisen an ihren entgegengesetzten Seiten sogenannte Einrollköpfe 20, 21 auf, welche in entsprechende komplementäre Einrollnuten 22, 23 der Metallprofile 16, 18 eingeführt sind.

Die Metallprofile 16, 18 weisen paarweise gegeneinander abgewinkelte Vorsprünge 24, 25 und 26 auf, welche eine Aufnahme für weitere Bauteile, beispielsweise Dichtungselemente oder Riegelstangen, bilden.

Figur 2A zeigt im Querschnitt ein erfindungsgemäß zu verwendendes erstes Profilteil 30 mit einem stegförmigen Grundkörper 32, der sich in eine Längsrichtung Z (nicht dargestellt) erstreckt und der auf beiden Seiten des Grundkörpers 32 einen ersten bzw. einen zweiten Profilbereich 34 aufweist.

In dem vorliegenden Ausführungsbeispiel ist das erste Profilteil 30 in seiner Gesamtheit, d.h. seinem Grundkörper und den daran angeformten Profilbereichen 34, aus einem Kunststoffmaterial hergestellt, d.h. bei diesem Ausführungsbeispiel sind die ersten und zweiten Kunststoffmaterialien identisch und in einem einzigen Extrusionsprozess hergestellt bzw. verarbeitbar.

Die Figuren 2B und 2C zeigen die Verwendung des ersten Profilteils 30, 30' bei der Herstellung eines erfindungsgemäßen Verbundprofils 40, welches neben zwei ersten Profilteilen 30, 30' zwei zweite Profilteile 42, 44 umfasst, welche typischerweise als Metallprofile ausgebildet sind.

Die Metallprofile 42, 44 sind als Hohlprofile ausgebildet und weisen auf einer Seite Aufnahmestrukturen in Form von Aufnahmenuten 46, 48 auf, welche senkrecht zur Längsrichtung Z der Profile gesehen einen T-förmigen Querschnitt aufweisen, der ein Volumen bereitstellt, in dem das Kunststoffmaterial der Profilbereiche 34 bei der erfindungsgemäßen Ausbildung eines Formschlusses aufgenommen werden kann.

In der Figur 2B sind die beiden ersten und die beiden zweiten Profilteile 30, 30' bzw. 42, 44 in einer schematisch dargestellten Ultraschallschweißvorrichtung 50 angeordnet, welche zum einen eine Sonotrode 52 und zum anderen ein Gegenlager 54 aufweist. Die in der Struktur des zu erzeugenden Verbundprofils bereits orientierten und platzierten Profilteile 30, 30', 42 und 44 sind zwischen der Sonotrode 52 und dem Widerlager 54 angeordnet, so dass das zweite Profilteil 42 direkt an dem Gegenlager 54 anliegt, während das andere zweite Profilteil 44 an einer Kontaktfläche 56 der Sonotrode 52 anliegt.

Die vier Bauteile des herzustellenden Verbundprofils 40 können als Gesamtheit wie in Figur 2B dargestellt in der Ultraschallschweißvorrichtung 50 im Bereich zwischen der Sonotrode 52 und dem Gegenlager 54 kontinuierlich durchgeführt werden, wobei von Seiten der Sonotrode 52 Ultraschall auf das zweite Profilteil 44 übertragen wird, mit dessen Energie die Profilbereiche 34 der beiden ersten Profilteile 30, 30' zunächst plastifiziert und dann durch Einwirkung von Druck verformt werden, so dass das zweite, plastifizierte Kunststoffmaterial der Profilbereiche 34 in die Aufnahmenuten 46, 48 eindringt, sich dort verformt und jeweils einen T-förmigen Formschluss 58 bildet. Sobald das zweite Kunststoffmaterial der Profilbereiche 34 nach dem Plastifizieren, Verformen und Ausfüllen der Nuten 46, 48 erkaltet ist, ist ein fester Verbund der Profilteile 30, 30', 42 und 44 gegeben, wie er in Figur 2C dargestellt ist.

Im Vergleich mit dem Ausführungsbeispiel der Figur 1 wird hier schon deutlich, dass die Aufnahmestruktur auf Seiten der zweiten Profilteile 42, 44 deutlich einfacher ausgestaltet werden kann und darüber hinaus, wie im Folgenden noch näher beschrieben und an weiteren Ausführungsbeispielen gezeigt, einen großen Spielraum an Gestaltungsmöglichkeiten des Verbindungsbereichs des erfindungsgemäßen Verbundprofils bietet.

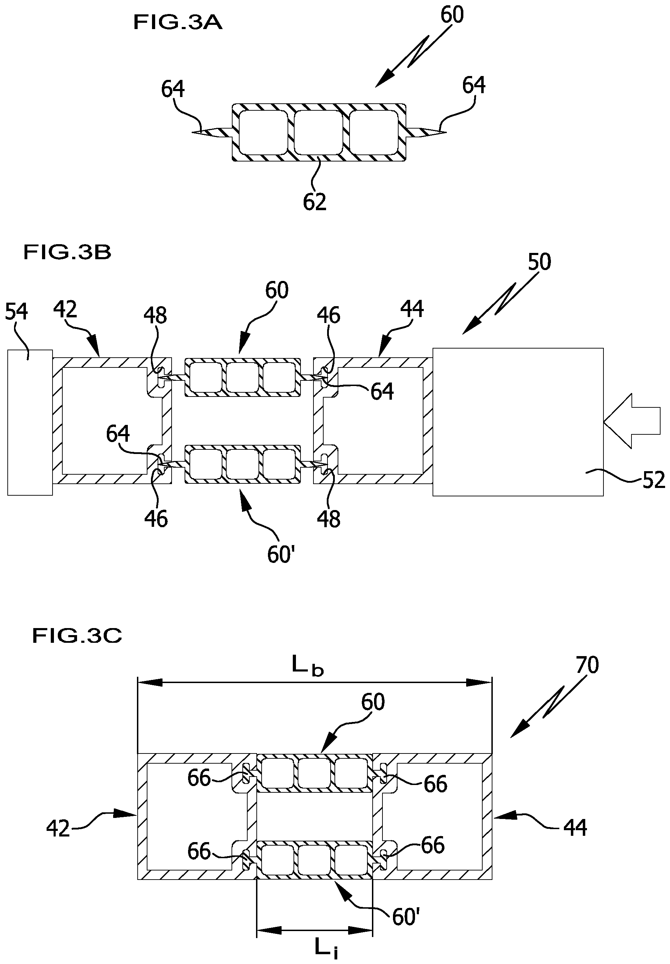

Figur 3A zeigt im Querschnitt ein erfindungsgemäß zu verwendendes erstes Profilteil 60 mit einem Grundkörper 62, der sich in eine Längsrichtung Z (nicht dargestellt) erstreckt und der auf beiden Seiten des Grundkörpers 62 einen ersten bzw. einen zweiten Profilbereich 64 aufweist. Das Profilteil 60 ist als Hohlkammerprofil ausgebildet, ähnlich wie das Profilteil 12 des Verbundprofils 10 der Figur 1.

Auch in diesem Ausführungsbeispiel kann das erste Profilteil 60 in seiner Gesamtheit, d.h. seinem Grundkörper 62 und den daran angeformten Profilbereichen 64, aus einem Kunststoffmaterial hergestellt werden, d.h. bei diesem Ausführungsbeispiel sind die ersten und zweiten Kunststoffmaterialien identisch.

Die Figuren 3B und 3C zeigen die Verwendung des ersten Profilteils 60, 60' bei der Herstellung eines erfindungsgemäßen Verbundprofils 70, welches neben zwei ersten Profilteilen 60, 60' zwei zweite Profilteile 42, 44 umfasst, welche schon im Rahmen des Ausführungsbeispiels der Figur 2 beschrieben wurden. In der Figur 3B sind die beiden ersten und die beiden zweiten Profilteile 60, 60' bzw. 42, 44 in der wieder schematisch dargestellten Ultraschallschweißvorrichtung 50 angeordnet. Die in der Struktur des zu erzeugenden Verbundprofils 70 bereits orientierten und platzierten Profilteile 60, 60', 42 und 44 sind zwischen der Sonotrode 52 und dem Widerlager 54 angeordnet, so dass das zweite Profilteil 42 direkt an dem Gegenlager 54 anliegt, während das andere zweite Profilteil 44 an der Kontaktfläche 56 der Sonotrode 52 anliegt.

Die vier Bauteile des herzustellenden Verbundprofils 70 können als Gesamtheit wie in Figur 3B dargestellt in der Ultraschallschweißvorrichtung 50 im Bereich zwischen der Sonotrode 52 und dem Gegenlager 54 kontinuierlich durchgeführt werden, wobei von Seiten der Sonotrode 52 Ultraschall auf das zweite Profilteil 44 übertragen wird, mit dessen Energie die Profilbereiche 64 der beiden ersten Profilteile 60, 60' zunächst plastifiziert und dann durch Einwirkung von Druck verformt werden, so dass das zweite, plastifizierte Kunststoffmaterial der Profilbereiche 64 in die Aufnahmenuten 46, 48 eindringt, sich dort verformt und jeweils einen T-förmigen Formschluss 66 bildet. Sobald das zweite Kunststoffmaterial der Profilbereiche 64 nach dem Plastifizieren, Verformen und Ausfüllen der Nuten 46, 48 erkaltet ist, ist ein fester Verbund der Profilteile 60, 60', 42 und 44 gegeben, wie er in Figur 3C dargestellt ist.

Im Vergleich mit dem Ausführungsbeispiel der Figur 2 ist ersichtlich, dass die erfindungsgemäßen Verbundprofile auch komplex strukturierte erste Profilteile beinhalten können und nicht auf einfache Strukturen wie die des ersten Profilteils 10 beschränkt sind. Dies wird insbesondere auch an dem folgenden Ausführungsbeispiel der Figur 4 deutlich.

Figur 4A zeigt im Querschnitt eine Hälfte eines erfindungsgemäßen Verbundprofils 80 mit einem ersten Profilteil 82 aus einem Kunststoffmaterial, beispielsweise aus einem einstückig extrudierten, glasfaserverstärkten Polyamidwerkstoff, sowie zwei zweiten Profilteilen 84, 86 aus Metall, beispielsweise Aluminium, vor der formschlüssigen Verbindung der Profilteile entsprechend dem erfindungsgemäßen Verfahren.

Das erste Profilteil 82 ist als Hohlkammerprofil ausgebildet, wobei die Profilgeometrie auf einem stegförmigen Grundkörper 88 basiert, an den auf einer ersten Oberfläche 90 eine Hohlkammerstruktur 92 mit vier Hohlkammern angeformt ist. Beidseits der Hohlkammerstruktur 92 erstrecken sich von der Oberfläche 90 des Grundkörpers 88 im Wesentlichen senkrecht ein erster und ein zweiter Profilbereich 94, 96 weg. Die beiden Profilbereiche 94, 96 weisen an ihren freien Enden einen im Wesentlichen dreieckförmigen Querschnitt auf.

Die zweiten Profilteile 84, 86 sind beidseits des ersten Profilteils 82 angeordnet und weisen auf ihren dem ersten Profilteil zugewandten Bereichen eine Aufnahmestruktur in Form von im Querschnitt T-förmigen Nuten 98, 99 auf. In der Abbildung der Figur 4A sind die beiden Metallprofile 84,86 bereits so positioniert, dass die Nuten auf die beiden Profilbereiche 94, 96 ausgerichtet sind.

In einem nächsten Schritt wird das erste Profilteil 82, vorzugsweise gleichzeitig, auf die beiden zweiten Profilteile 84, 86 aufgesetzt, so dass die beiden Profilbereiche 94, 96 des ersten Profilteils in die Nuten 98, 99 der zweiten Profilteile 84, 86 lose eingreifen und einen körperlichen Kontakt ausbilden, wie dies in Figur 4B gezeigt ist.

In einem darauffolgenden Schritt wird auf der der Oberfläche 90 gegenüberliegenden Oberfläche 100 des Grundkörpers 88 des ersten Profilteils 82, wie in Figur 4C gezeigt, eine Sonotrode mit ihren Kontaktflächen 102, 104 aufgesetzt, derart, dass die Kontaktflächen 102, 104 gegenüberliegend zu den Profilbereichen 94, 96 platziert sind. Über die Sonotrode und ihre Kontaktflächen 102, 104 wird nachfolgend mittels Ultraschall Energie in die Profilbereiche 94, 96 eingeleitet, die zum Plastifizieren des Kunststoffmaterials der Profilbereiche 94, 96 ausreichend ist. Über die Sonotrode kann gleichzeitig Druck auf die Oberfläche 100 des ersten Profilteils 82 ausgeübt werden, so dass sich beim Plastifizieren des Kunststoffmaterials dasselbe verformt und den von den Nuten 98, 99 bereitgestellten Hohlraum füllt und jeweils einen Formschluss 106, 108 zwischen dem ersten Profilteil und den zweiten Profilteilen herstellt. Dies ist in Figur 4D veranschaulicht.

Die Senkhöhe hs, die sich beim erfindungsgemäßen Verfahren bei der Herstellung des erfindungsgemäßen Verbundprofils ergibt, ist aus dem Vergleich der Positionierung des ersten Profilteils 82 gegenüber den zweiten Profilteilen 84, 86 in den Figuren 4B und 4D erkennbar. Sie beträgt bei diesem Ausführungsbeispiel ca. 2 mm.

In dem vorliegenden Ausführungsbeispiel ist das erste Profilteil 82 in seiner Gesamtheit, d.h. seinem Grundkörper 88 und den daran angeformten Profilbereichen 92, 94, 96, aus demselben Kunststoffmaterial hergestellt, d.h. bei diesem Ausführungsbeispiel sind die ersten und zweiten Kunststoffmaterialien identisch. Die gezielte Plastifizierung der Profilbereiche 94, 96 bei Einwirkung des Ultraschalls der Sonotrode ergibt sich aus der Form dieser Profilbereiche 94, 96. Andere Abschnitte des ersten Profilteils 82, insbesondere der Grundkörper 88 und die Hohlkammerstruktur 92 behalten bei dem Plastifiziervorgang ihre ursprüngliche Form bei, selbst wenn sie aus dem identischen Kunststoffmaterial wie der Profilbereich hergestellt sind.

Alternativ können die Profilbereiche 94, 96 auch aus einem zweiten Kunststoffmaterial - gegebenenfalls separat - hergestellt werden und beispielsweise an den Grundkörper 88 anextrudiert, koextrudiert, angeschweißt oder angeklebt werden. Bei dieser Vorgehensweise können das erste und das zweite Kunststoffmaterial jeweils im Wesentlichen unabhängig voneinander ausgewählt werden und für den jeweiligen Zweck optimiert werden.

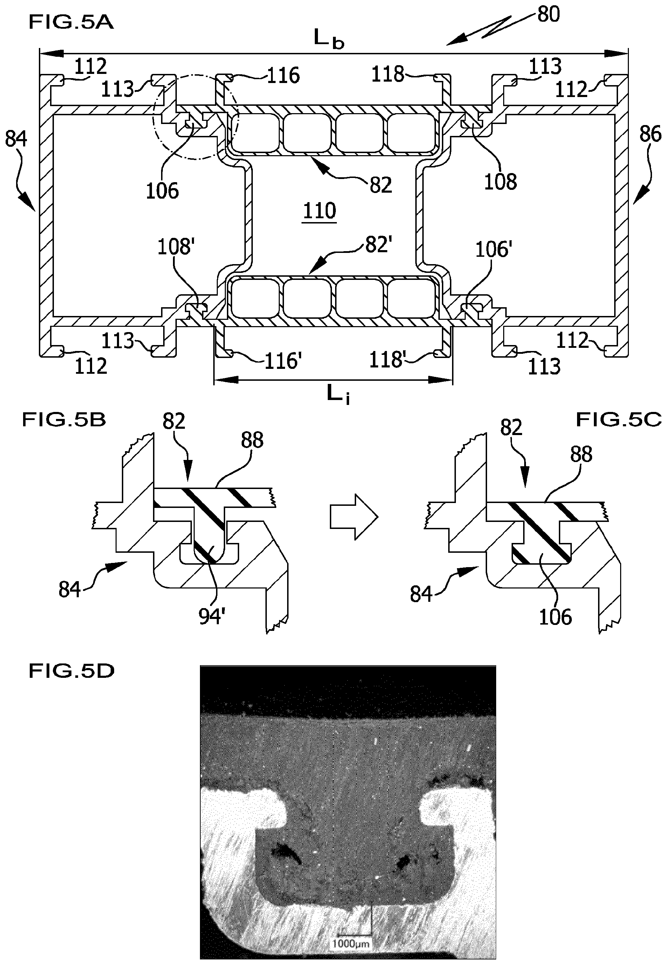

Die Figur 5A zeigt ein erfindungsgemäß hergestelltes Verbundprofil 80 in seiner Gesamtheit, bei dem die beiden zweiten Profilteile 84, 86 über zwei erste Profilteile 82, 82' miteinander unter Bildung einer mittigen Hohlkammer über die Formschlüsse 106, 108 bzw. 106', 108' fest miteinander verbunden sind.

Die zweiten Profilteile 84, 86 weisen paarweise gegeneinander abgewinkelte Vorsprünge 112, 113 auf, die der Aufnahme von weiteren Bauteilen, beispielsweise Dichtlippen, dienen. Auch die ersten Profilteile 82, 82' weisen paarweise gegeneinander abgewinkelte Vorsprünge 116, 118 bzw. 116', 118' auf, die ebenfalls weitere Bauelemente, wie z.B. Dichtelemente oder Riegelstangen, aufnehmen können.

Die Querschnittsgeometrie entspricht somit im Wesentlichen der Querschnittsgeometrie des herkömmlichen Verbundprofils 10 von Figur 1, allerdings mit einigen wesentlichen Unterschieden.

Bei einer gleichen Bautiefe L_{b} ergibt sich eine deutlich (ca. +33 %) höhere Isoliertiefe Lᵢ, wobei die Grundstruktur der beiden Metallbauteile (zweite Profilteile) 84, 86 vereinfacht werden kann und ansonsten unverändert bleibt. Vereinfacht ist insbesondere die Ausbildung der Nuten 98, 99 und der zugehörigen Umgebung, in der zum einen das erste Profilteil 82 ein Funktionselement mit übernehmen kann und zum anderen das Metallbauteil im Bereich der Nut 98, 99 jeweils einfacher gestaltet werden kann, da eine Umformbarkeit des Metallbauteils im Bereich der Nuten 98, 99 nicht verlangt wird. Darüber hinaus lässt sich eine bessere Optik auf den jeweiligen Sichtseiten des Verbundprofils realisieren, da insbesondere Rändelspuren, wie im Bereich der Einrollverbindungen in Figur 1 gezeigt, vermieden werden können. Ferner kann ein Teil der abgewinkelten Vorsprünge (hier die Vorsprünge 116, 118) an dem ersten Profilteil ausgebildet werden.

Die Figur 5B zeigt noch einmal zusammen mit der Figur 5C schematisch den Vorgang der Ausbildung des Formschlusses 106 durch die Verformung eines Profilbereichs 94', der hier in einer geringen Abwandlung zu dem ersten Profilbereich 94 der Figur 4A mit einer abgerundeten Spitze anstelle eines dreieckförmigen freien Endes gezeigt ist.

Die Figur 5D zeigt schließlich eine Lichtmikroskopaufnahme eines Sägeschnitts eines in dieser Weise (Figuren 5B und 5C) erhaltenen Formschlusses und die bei der Verformung erzielte Mikrostruktur des verformten Kunststoffmaterials.

Bei der Ausführungsform der Figur 5A ist ersichtlich, dass aufgrund der anderen Ausrichtung der Profilbereiche 94, 96 der ersten Profilteile 82 der Verbund mit dem jeweiligen Metallprofil 84, 86 schrittweise erfolgen kann, d.h. die beiden ersten Profilteile 82, 82' können in zwei aufeinander folgenden, getrennten Verfahrensschritten mit den jeweiligen zweiten Profilteilen 84, 86 verbunden werden, so dass - je nach Komplexität der Geometrie der einzelnen Profilteile - der Verbund schrittweise oder aber auch - wie dies durchaus bei dem Verbundprofil 80 der Figur 5A möglich ist - gleichzeitig hergestellt werden kann.

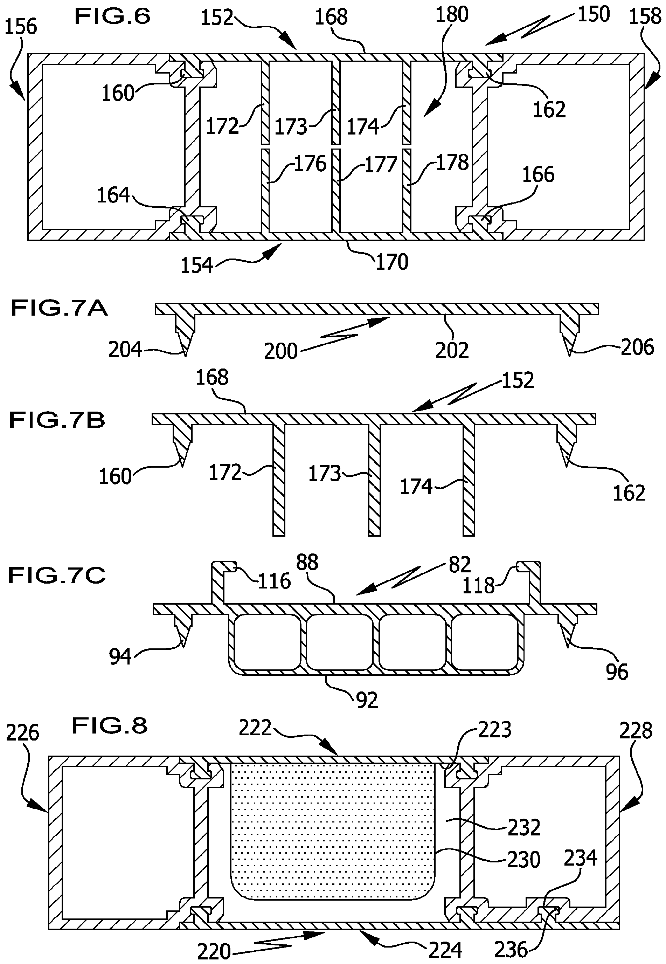

Eine weitere Ausführungsform eines erfindungsgemäßen Verbundprofils 150 ist aus Figur 6 ersichtlich, bei dem das Verbundprofil 150 aus zwei ersten Profilteilen 152, 154 sowie zwei typischerweise aus Metall hergestellten zweiten Profilteilen 156, 158 hergestellt ist.

Ähnlich wie bei dem Verbundprofil 80 der Figur 5A sind hier für die den Formschluss bildenden Profilbereiche 160, 162 des einen ersten Profilteils 152 bzw. die Profilbereiche 164, 166 des anderen ersten Profilteils 154 entsprechende Nuten in den Metallprofilen (zweiten Profilteilen) 156, 158 ausgebildet, analog zu dem Konzept, wie es im Zusammenhang mit den Figuren 4A bis 4D zuvor beschrieben wurde.

Bei den ersten Profilteilen 152, 154 handelt es sich um erste Profilteile, die aus einem Grundkörper 168 bzw. 170 hergestellt sind, von dem jeweils in regelmäßigen Abständen in Längsrichtung der ersten Profilteile 152, 154 verlaufende und am Grundkörper 168 bzw. 170 ausgebildete Vorsprünge 172, 173, 174 bzw. 176, 177, 178 senkrecht abstehen ("Fahnen"), die im verbauten Zustand, wie in Figur 6 gezeigt, gegeneinander weisen und so die zwischen den ersten Profilteilen 152, 154 und 156, 158 gebildete Hohlkammer 180 in vier Teilvolumina unterteilen, so dass eine Konvektion von Luft in diesem Hohlraum 180 im Wesentlichen unterdrückt wird.

Die Figuren 7A bis 7C zeigen nochmals im Vergleich verschiedene Variationen von ersten Profilteilen und die Möglichkeit, die ersten Profilteile den jeweiligen Einbaubedingungen in einem Verbundprofil anzupassen. Die einfachste Variante eines ersten Profilteils 200 ist in Figur 7A gezeigt, wobei das erste Profilteil 200 einen Grundkörper 202, der im Wesentlichen streifenförmig in eine Z-Richtung verläuft, aufweist, der an beiden Randbereichen jeweils von der selben Oberfläche des ersten Profilteils 200 abstehende Profilbereiche 204, 206 aufweist, die im Rahmen eines Ultraschallverfahrens plastifiziert und verformt werden können, um im Formschluss mit zugehörigen und mit einer entsprechenden Aufnahmestruktur versehenen zweiten Profilteilen (nicht gezeigt) verbunden werden zu können, wie sie beispielsweise im Rahmen der Figur 6 als zweite Profilteile 156, 158 dargestellt sind.

Diese aus der Figur 7A ersichtliche Grundgeometrie lässt sich, wie anhand der Figuren 7B und 7C gezeigt, variieren, indem weitere Funktionsteile entweder einstückig mit dem Grundkörper 202 des in Figur 7A gezeigten ersten Profilteils mit seiner Grundgeometrie verbunden werden können, so dass daraus dann erste Profilteile entstehen, wie sie bereits im Rahmen der Figur 6 beschrieben bzw. bereits im Rahmen der Figur 5 in einer Einbausituation dargestellt wurden.

Wie aus Figur 7C noch im Vergleich ersichtlich, lassen sich Funktionselemente nicht nur auf der im Verbundprofil nach innen weisenden Oberfläche der Grundkörper anordnen, sondern auch auf der Sichtseite, so dass - wie im Beispiel der Figur 7C - von den abgewinkelten Vorsprüngen 116, 118 eine zusätzliche Aufnahme, beispielsweise für außen anzubringende Dichtungselemente, an dem Grundkörper 88 des ersten Profilteils 82 geschaffen ist.

Eine weitere Variationsmöglichkeit ist im verbauten Zustand eines erfindungsgemäßen Verbundprofils 220 in Figur 8 dargestellt, bei dem - basierend auf einem ersten Profilteil 222, einem weiteren ersten Profilteil 224 sowie zwei zweiten Profilteilen 226, 228 - in ähnlicher Weise wie im Zusammenhang mit der Figur 6 schon beschrieben, das Verbundprofil 220 hergestellt wird.

Das erste Profilteil 222 basiert auf der Grundstruktur eines ersten Profilteils 200, wie in Figur 7A dargestellt, wobei dieses im Verbundprofil 220 an einer innen liegenden Oberfläche 223 mit einem Schaumstoffprofil 230 bestückt ist, welches sich typischerweise kontinuierlich in Längsrichtung des ersten Profilteils 222 erstreckt und hier einen Großteil einer Hohlkammer 232 des Verbundprofils 220 ausfüllt und so ebenfalls Konvektionseffekte unterdrücken kann. Alternativ können auch Schaumleisten aus einem thermoplastischen Werkstoff, z.B. Polystyrol, Polyamid oder Polyester, aufgeklebt werden.

Eine weitere Besonderheit ist in der Figur 8 auf Seiten des ersten Profilteils 224 noch gezeigt, bei dem ein zusätzlicher Profilbereich vorgesehen ist, der in eine weitere, seitens des zweiten Profilteils 228 zur Verfügung gestellte Nut 236 eingreift und dort im Rahmen eines erfindungsgemäßen Verfahrens zu einem weiteren Formschluss plastifiziert und verformt wurde. Diese Modifikation verbessert z.B. mechanische Eigenschaften des Verbundprofils (insbesondere Querzug- und Verschubverhalten) und führt zu einer einheitlichen Ansichtsfläche.

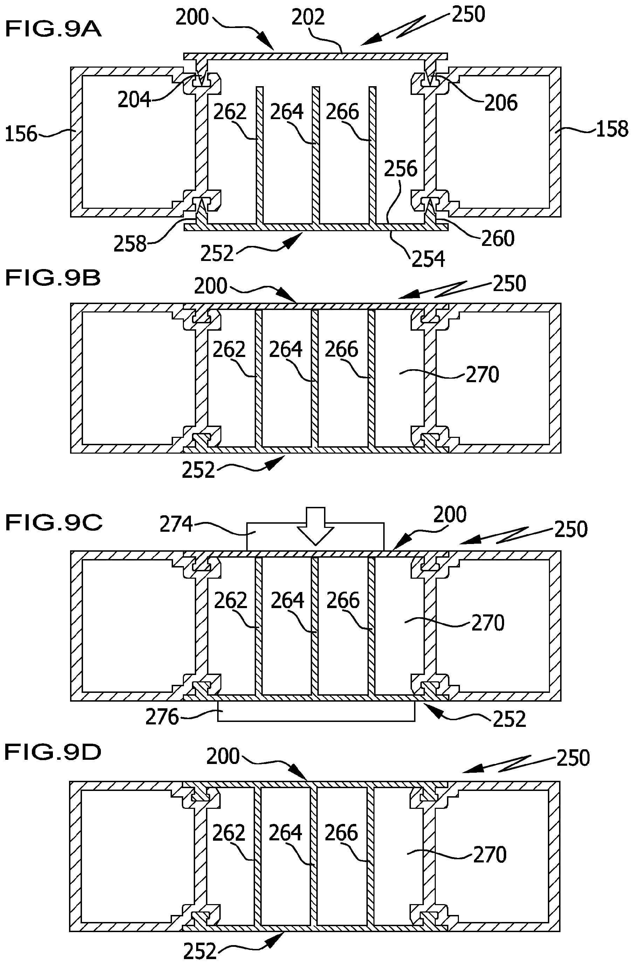

In den Figuren 9A bis 9D wird die erfindungsgemäße Herstellung eines erfindungsgemäßen Verbundprofils 250 in mehreren Schritten dargestellt. Das Verbundprofil 250 beinhaltet die aus Metall gefertigten zweiten Profilteile 156, 158, wie sie bereits im Zusammenhang mit der Figur 6 beschrieben wurden, und verwendet als eines der ersten Profilteile ein Profilteil 200, wie dies im Zusammenhang mit der Figur 7A schon beschrieben wurde. Ein weiteres erstes Profilteil 252 ist aus einem Grundkörper 254, der eine ebene, in Z-Richtung verlaufende bandförmige Struktur aufweist, sowie an den Seitenbereichen jeweils von einer Oberfläche 256 abstehenden Profilbereichen 258, 260 gebildet. Zusätzlich sind auf der Oberfläche 256 des ersten Profilteils 252 steg- oder fahnenartige Vorsprünge 262, 264, 266 angeordnet, die der Unterteilung eines in dem Hohlprofil zu bildenden Hohlvolumens 270 in voneinander abgetrennte Volumina dienen.

In einem ersten Verfahrensschritt werden die auf die zweiten Profilteile 156, 158 aufgesetzten beiden ersten Profilteile 200, 252 - wie schon in den vorhergehenden Ausführungsbeispielen ausführlich erläutert - durch ein Plastifizieren der Profilbereiche 204, 206 bzw. 258, 260 formschlüssig verbunden, so dass sich dann eine Struktur ergibt, wie sie in der Figur 9B dargestellt ist. Hier kontaktieren die fahnenartigen Vorsprünge 262, 264, 266 mit ihren freien Enden die nach innen gewandte Oberfläche des ersten Profilteils 200, so dass bereits dadurch eine Unterteilung des Hohlraums 270 in vier Volumenbereiche erzielt ist. Die Fahnen können dabei mit einer geringfügigen Überlänge ausgeführt werden (z.B. 0,1 mm oder mehr), damit durch die Federkräfte im Kunststoff ein Anpressdruck vorliegt.

Des Weiteren können die fahnenartigen Vorsprünge 262, 264, 266 verwendet werden, um eine stoffschlüssige Verbindung des ersten Profilteils 252 mit dem anderen ersten Profilteil 200 herzustellen, und auch dies kann im Rahmen einer Ultraschallverschweißung geschehen, wie dies in Figur 9C schematisch gezeigt ist. Dazu wird das Verbundprofil 250 in eine Sonotrodenvorrichtung eingeführt, wobei eine Sonotrode 274 auf der Außenoberfläche des ersten Profilteils 200 anliegt, während auf der Außenoberfläche des ersten Profilteils 252 ein Gegenlager 276 angeordnet ist und das Verbundprofil 250 insgesamt stützt.

Nach dem Ultraschall-Schweißen ist eine einstückige Struktur aus den beiden ersten Profilteilen 200 und 252 entstanden, wie dies in Figur 9D gezeigt ist. Das Verbundprofil 250 weist eine verbesserte Quer- und Verwindungssteifigkeit auf, die aus der stoffschlüssigen Verbindung der beiden ersten Profilteile 200 und 252 über die stegartigen Vorsprünge 262, 264, 266 resultiert. Diese Verschweißung kann zeitgleich zum Formschluss oder nachfolgend ausgeführt werden.

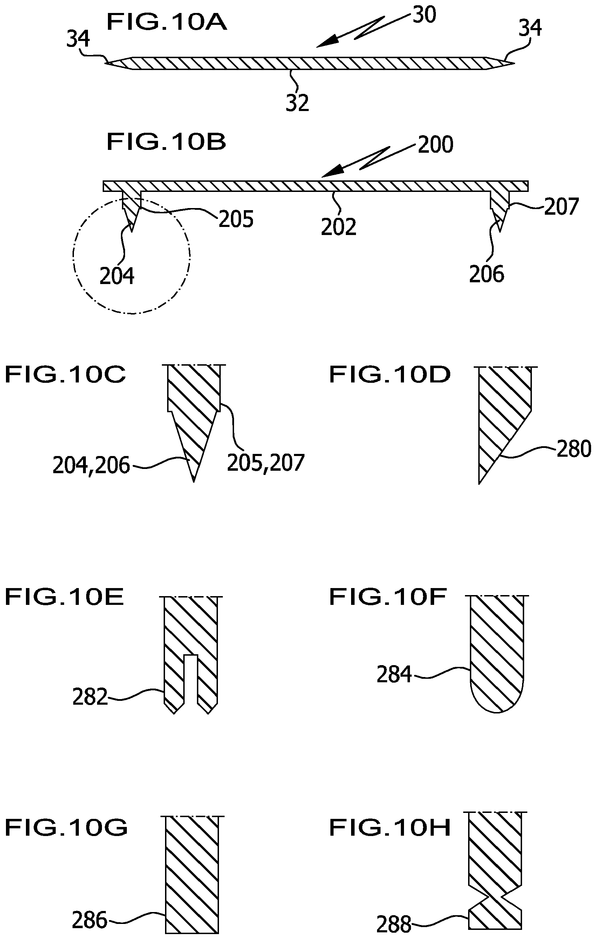

In den Figuren 10A und 10B sind noch als Referenz die beiden Typen an ersten Profilteilen 30 und 200 dargestellt, mit einem Grundkörper 32 bzw. 202 und an beiden Endbereichen angeordneten abschmelzbaren Profilbereichen 34 bzw. 204, 206. Die Profilbereiche 204, 206 stehen hier im Wesentlichen senkrecht vom Grundkörper 202 ab, andere Winkel sind jedoch möglich. Die Profilbereiche 204, 206 weisen nahe am Grundkörper 202 eine dickere Wandstärke 205, 207 als der Grundkörper 202 selbst auf. Dies hat sowohl vorteilhafte Auswirkungen auf die Energieeinleitung (bessere Einleitung des Ultraschalls) als auch auf die mechanische Festigkeit des Verbundprofils, da durch die Aufdickung höhere Kräfte übertragen werden können, z.B. Querzugkräfte.

Ausgehend hiervon sind in den Figuren 10C bis 10H die abschmelzbaren Profilbereiche in unterschiedlichen Varianten dargestellt, zunächst in Figur 10C, die abschmelzbaren Profilbereiche 204, 206 mit einer im Querschnitt dreieckigen Form, wie sie auch im Zusammenhang mit der Ausführungsform eines ersten Profilteils 200 zum Einsatz kommen.

Eine erste Alternative hierzu ist in der Figur 10D dargestellt, in Form eines abschmelzbaren Profilbereichs 280, der eine Keilform aufweist. In Figur 10E ist eine weitere Alternative eines abschmelzbaren Profilbereichs 282 mit einer Doppelspitze gezeigt, die durch einen Spalt getrennt wird. Eine weitere Alternative ist in Figur 10F gezeigt, mit einer abgerundeten Spitze, wie diese bereits im Zusammenhang mit der Figur 5B gezeigt und beschrieben wurde.

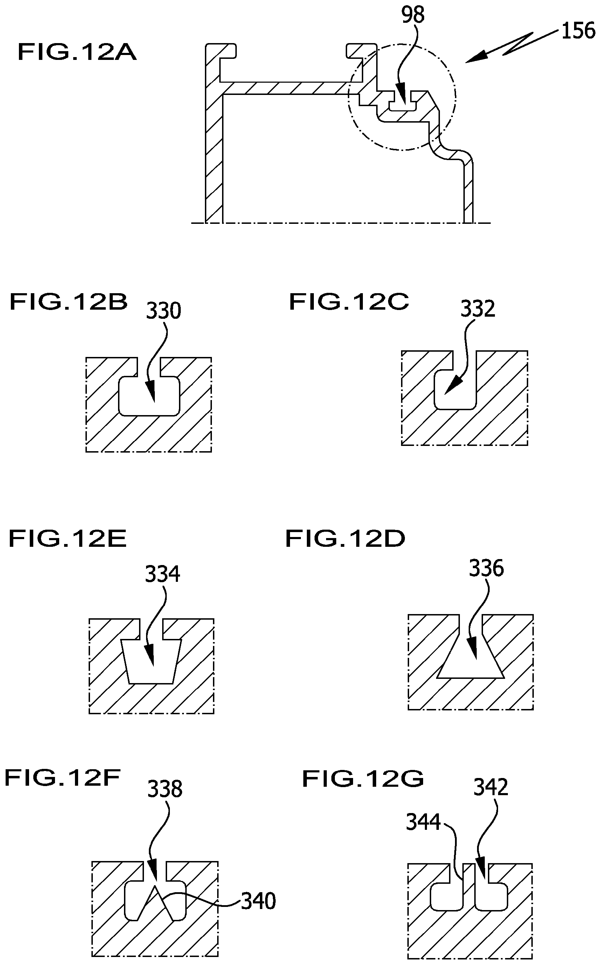

Eine weitere Möglichkeit der Ausbildung des abschmelzbaren Profilbereichs ist in Form des Profilbereichs 286 in Figur 10G gezeigt, welcher bevorzugt mit einer speziell angepassten Aufnahmestruktur (z.B. Figur 12F) kombiniert wird, da er selbst keine Struktur aufweist, mit der sich die eingetragene Ultraschallenergie fokussieren lässt. Des Weiteren ist eine Möglichkeit zur Ausbildung eines abschmelzbaren Profilbereichs in der Figur 10H in Form eines Profilbereichs 288 dargestellt, bei der wiederum eine Fokussierung der Ultraschallenergie im Bereich der Taillierung/Verjüngung erfolgt. Die Merkmale der Abschmelzelemente können vielfältig kombiniert und angepasst werden, z.B. in deren Länge, Breite und Aspektverhältnis.

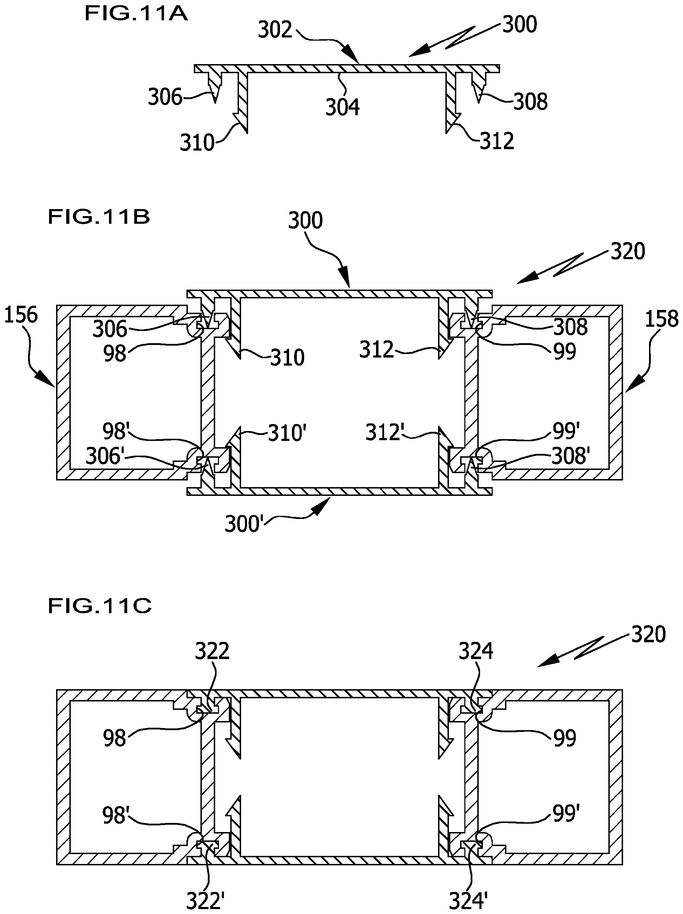

In Figur 11A ist eine weitere Variante eines ersten Profilteils 300 dargestellt, welche einen Grundkörper 302 umfasst sowie auf dessen Oberfläche 304 angeordnete abschmelzbare Profilbereiche 306, 308, wie diese bereits im Zusammenhang mit dem ersten Profilteil 200, beispielsweise in der Figur 10B, gezeigt und beschrieben wurden.

Das erste Profilteil 300 zeichnet sich gegenüber den anderen bisher beschriebenen Varianten dadurch aus, dass an der Oberfläche 304, von der bereits die Profilbereiche 306, 308 als abschmelzbare Vorsprünge abstehen, zusätzliche Funktionselemente 310, 312 als Montagehilfe angeordnet (hier einstückig angeformt) sind, welche mit einem hakenförmigen Vorsprung enden.

Figur 11B zeigt die Verwendung dieser ersten Profilteile 300 bei der Herstellung eines erfindungsgemäßen Verbundprofils 320, wobei neben den beiden ersten Profilteilen 300, 300' wiederum die zweiten Profilteile 156, 158 zum Einsatz kommen.

In einem ersten Schritt des erfindungsgemäßen Verfahrens zur Herstellung der erfindungsgemäßen Verbundprofile werden die beiden ersten Profilteile 300, 300' mit den beiden zweiten Profilteilen 156, 158 zusammengeführt, wobei nun aufgrund der Montagehilfen in Form der hakenförmigen Vorsprünge 310, 312, bzw. 310', 312', eine einfach handhabbare Struktur erhalten wird, sodass sich der Vorgang der Herstellung einer formschlüssigen Verbindung während des Ultraschallschweißens deutlich vereinfacht. Die Vorsprünge 310, 312 bzw. 310', 312' unterstützen ebenfalls das genaue Positionieren bzw. das Zentrieren der Fügepartner.

Die fertig formschlüssig verbundene Struktur des Verbundprofils 320 ist in Figur 11C dargestellt, bei der die Profilbereiche 306, 308, bzw. 306', 308' formschlüssig in die von den beiden zweiten Profilteilen 156, 158 bereitgestellten Nuten 98, 99, bzw. 98', 99' eingreifen und die Formschlussstrukturen 322, 324, bzw. 322', 324' ausbilden.

Die Figur 12A zeigt nochmals einen Ausschnitt eines zweiten Profilteils 156 mit einer Nut 98 als Aufnahmestruktur für das plastisch verformte zweite Polymermaterial eines Profilbereichs eines ersten Profilteils.

Die folgenden Figuren 12A bis 12G zeigen Variationen, die bei solchen spezifischen Aufnahmestrukturen möglich sind.

Figur 12B zeigt eine symmetrische Aufnahmestruktur 330, wobei diese Struktur ähnlich wie die Nut 98 der Figur 12A ausgebildet ist, jedoch ein größeres Volumen bereithält.

In der Figur 12C ist eine weitere Variante einer asymmetrische Aufnahmestruktur in Form einer Nut 332 gezeigt, bei der im Gegensatz zu der Nut 330, bzw. auch der Nut 98, ein Hinterschnitt nur einseitig ausgebildet ist.

Bei dem Ausführungsbeispiel für eine Aufnahmestruktur der Figur 12E ist wiederum eine Nut 334 mit symmetrischem Querschnitt vorgesehen, welche eine trapezförmige Querschnittsstruktur aufweist. In der Figur 12D ist ebenfalls wieder eine symmetrische Aufnahmestruktur in Form der Nut 336 gezeigt, die im Querschnitt eine im Wesentliche dreieckförmige Struktur aufweist.

In der Figur 12F ist eine Variante einer Aufnahmestruktur der Figur 12D gezeigt, bei der in der Nut 338 ein im Querschnitt dreieckförmiger Vorsprung 340 zentral am Boden der Nut 338 angeordnet ist, die beim Einsetzen eines Profilbereichs eines ersten Profilteils, beispielsweise wie in Figur 10E, 10F, 10G und 10H gezeigt, für eine Zentrierung sorgt, die plastifizierte Schmelze ableitet und darüber hinaus zusätzlich eine Fokussierung der Ultraschallenergie der Sonotrode auf das freie Ende des Profilbereichs des ersten Profilteils, der in dieser Aufnahmestruktur oder Nut 338 eingeführt wird, hervorruft.

In ähnlicher Form gilt dies auch für die Figur 12G, bei der eine Aufnahmestruktur in dem zweiten Profilteil in Form einer Nut 342 vorgesehen ist, die wiederum symmetrisch ausgebildet ist und zentral einen Vorsprung 344 umfasst, welcher ähnlich wie der in Figur 12F gezeigte im Querschnitt dreieckförmige Vorsprung 340 für eine Zentrierung oder Führung eines Profilbereichs eines ersten Profilteils dienen kann, insbesondere eines Profilbereichs wie in Figur 10E gezeigt.

Die vorstehenden speziellen Ausführungsbeispiele für Aufnahmestrukturen zeigen, dass bei den nutförmigen Aufnahmestrukturen eine große Variationsbreite möglich ist, die zum einen einem gegebenenfalls eingeschränkten Platzangebot im Querschnitt des zweiten Profilteils 156 Rechnung tragen kann und/oder weitere Verbesserungen bei der Herstellung des Formschlusses erzielen kann.

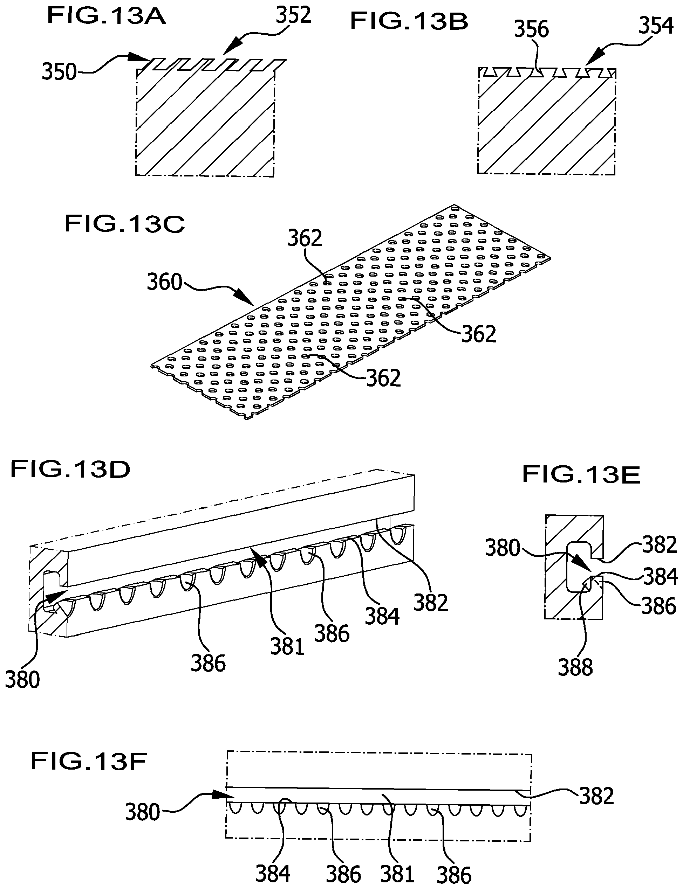

Weitere Varianten für Aufnahmebereiche von zweiten Profilteilen sind in den Figuren 13A bis 13F gezeigt.

In Figur 13A ist eine Aufnahmestruktur gezeigt, bei der eine Vielzahl von gegenüber der Oberfläche 350 geneigt angeordneten kleinen Vorsprüngen 352 ausgebildet ist, in die beim Plastifizieren und Verformen eines Profilbereichs das zweite Kunststoffmaterial eindringen und so für einen Formschluss sorgen kann. Die Anordnung dieser Vorsprünge kann regelmäßig oder unregelmäßig mit gleichen oder abwechselnden Winkeln erfolgen.

Eine Alternative ist in der Figur 13B gezeigt, bei der die Aufnahmestruktur 354 eine Vielzahl von trapezförmigen Rücksprüngen 356 aufweist, die bei der Bildung eines Formschlusses zwischen einem ersten und einem zweiten Profilteil, bzw. dem Profilbereich des ersten Profilteils und des zweiten Profilteils, für einen ausreichenden Formschluss sorgen.

Die Figur 13C zeigt eine weitere Alternative einer Aufnahmestruktur 360, in Form eines lochblechartigen Abschnittes oder Ausschnittes, wobei das zweite Kunststoffmaterial eines Profilbereichs eines ersten Profilteils in die Durchgangsöffnungen 362 ein- und hindurchtreten, gegebenenfalls eine Verdickung ausbilden und so ebenfalls für einen Formschluss nach dem Erkalten des zweiten Kunststoffmaterials sorgen kann.

Eine weitere Variante einer nutförmigen Aufnahmestruktur 380 ist in den Figuren 13D bis 13F in mehreren Perspektiven gezeigt. Die Figur 13D zeigt die Aufnahmestruktur 380 in einer perspektivischen Darstellung, wobei erkennbar ist, dass der Eintrittsspalt 381 für die sich nach unten hin erweiternde Nut auf einer Seite mit einer glatten Wandfläche 382 begrenzt ist, während gegenüberliegend die Wandfläche eine gerändelte Struktur 386 aufweist, d.h., hier ist die Wandfläche nach Ausbildung der Aufnahmestruktur 380 nachträglich verformt, sodass sich eine Reihe von in Längsrichtung aneinander gereihten regelmäßig angeordneten Einbuchtungen ergeben und partiell Material in den unteren Bereich der Aufnahmestruktur 380 in Form von wellenförmigen Erhebungen 388 eingedrückt ist.

Die Figur 13F zeigt diese spezielle Ausführung einer Aufnahmestruktur 380 nochmals in einer Draufsicht.

Aufgrund der speziell ausgestalteten Struktur, insbesondere auf Seiten der Oberfläche 384, wird bei einem formschlüssigen Eindringen eines zweiten Kunststoffmaterials bei der Ausbildung eines Formschlusses durch einen abschmelzenden Profilbereich eines ersten Profilteils nicht nur über die eigentliche Aufnahmestruktur 380 ein Formschluss erzielt, sondern darüber hinaus noch eine besonders hohe Schubfestigkeit dadurch erzielt, dass auch zweites Kunststoffmaterial eventuell in die Ausbuchtungen oder Einkerbungen der gerändelten Struktur 386 auf Seiten der Oberfläche 384 eingetragen wird.

Insbesondere die nach unten weisenden Spitzen 388 (vgl. Figur 13E) tragen zu einer deutlichen Erhöhung der Schubfestigkeit der Verbindung in Längsrichtung der Aufnahmestruktur 380 bei, da diese Struktur während des Ausbildens des Formschlusses sehr gut mit plastifizierter Schmelze ummantelt wird.

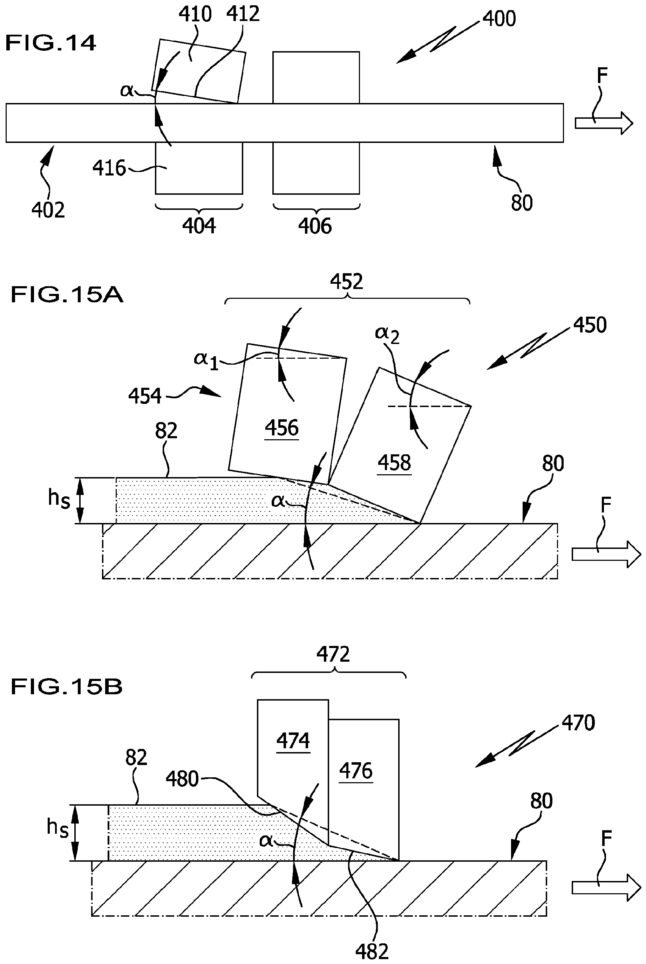

In Figur 14 ist eine erste Variante einer Vorrichtung 400 zur Durchführung des erfindungsgemäßen Verfahrens zur Herstellung von Verbundprofilen schematisch dargestellt.

Die Vorrichtung 400 weist eine erste Führungszone 402 auf (Führungselemente nicht gezeigt), in der die zunächst getrennt hergestellten und miteinander zu verbindenden Profilteile eines Verbundprofils, am Beispiel des Verbundprofils 80 der Figur 5A ein erstes Profilteil 82 und zwei zweite Profilteile 84, 86, in einer vorgegebenen Orientierung zusammengeführt werden. Danach werden die Profilteile 82, 84, 86 einer darauffolgend angeordneten Schweißzone 404 und einer darin untergebrachten Ultraschall-Schweißvorrichtung in einer Förderrichtung F zuführt.

Auf die Schweißzone 404 in Förderrichtung F folgend ist eine Haltezone 406 angeordnet, die die in der Schweißzone 404 zusammengefügten und formschlüssig verbundenen Profilteile 82, 84, 86 als fertiges Verbundprofil 80 in ihrer Relativposition zueinander hält, sodass das plastifizierte und verformte zweite Kunststoffmaterial 106, 108 abkühlen kann und somit der erzeugte Formschluss sich verfestigen kann.

Eine in der Schweißzone 404 angeordnete Sonotrode 410 ist in der Figur 14 mit ihrer Kontaktfläche 412 gegenüber der Längsrichtung der Profilteile des Verbundprofils 80 in einem spitzen Winkel α angeordnet, der beispielsweise kleiner als ca. 5°, insbesondere kleiner als ca. 3°, gewählt ist. In der Schweißzone 404 kann die Sonotrode 410 eine Kraft senkrecht zur Oberfläche des Verbundprofils 80 ausüben, wodurch die Verformung eines Profilbereichs oder der Profilbereiche 94, 96 des ersten Profilteils 82 des Verbundprofils 80 unterstützt wird. Das erste Profilteil 82 wird dabei um eine Senkhöhe hs gegen die zweiten Profilteile 84, 86 abgesenkt, wie dies in der Figurenfolge der Figuren 4A bis 4D schon veranschaulicht wurde. Die Profilteile des Verbundprofils 80 werden dabei von einer Auflage 416 in der Schweißzone 404 gestützt. Die ersten und zweiten Profilteile 84, 86 sind somit beim Eintritt in die Haltezone 406 in der vorgegebenen Anordnung zueinander angeordnet.

Aufgrund der gezeigten geometrischen Anordnung der Sonotrode 410 gegenüber der Auflage 416 (Gegenlager) und der Förderrichtung F kann das Material eines Profilbereichs 94, 96 fortlaufend plastifiziert und zeitnah im plastifizierten Zustand so verpresst werden, dass es in die Aufnahmestrukturen (Nuten 98, 99) der zweiten Profilteile 84, 86 eintreten, diese ausfüllen und damit einen Formschluss 106, 108 zwischen dem ersten Profilteil 82 und den zweiten Profilteilen 84, 86 bilden kann.

Die Figur 15A zeigt eine zweite Variante einer Vorrichtung 450 zur Durchführung des erfindungsgemäßen Verfahrens zur Herstellung von erfindungsgemäßen Verbundprofilen.

Hier wird in einer Schweißzone 452 eine Sonotrodenanordnung 454 mit zwei Sonotroden 456, 458 verwendet, die unabhängig voneinander ansteuerbar und betreibbar sind, wobei die beiden Sonotroden 456, 458 der Sonotrodenanordnung 494 mit ihren Kontaktflächen in unterschiedlichen Winkeln α₁ und α₂ zur Transportebene des Verbundprofils 80 ausgerichtet sind. Der Winkel α₁ ist kleiner als der Winkel α₂ gewählt. Auf die gesamte Strecke des Sonotrodenkontakts ergibt sich ein gemittelter Kontaktwinkel α. Hier findet eine sukzessiv steigende Krafteinleitung in das Verbundprofil 80 bzw. dessen Profilteile statt, die aufgrund der Verwendung von zwei Sonotroden 474, 476 einfacher an die Materialeigenschaften und die Geometrie des zweiten Kunststoffmaterials des oder der Profilbereiche 94, 96 als auch die Durchlaufgeschwindigkeit des Verbundprofils 80 angepasst werden kann.

Eine alternative Ausgestaltung einer Schweißzone 472 als Teil einer Vorrichtung 470 ist in Figur 15B dargestellt. Auch hier werden in der Schweißzone 472 zwei Sonotroden 474, 476 verwendet. Die Sonotroden 474, 476 sind parallel zueinander angeordnet, weisen jedoch in unterschiedlichen Winkeln α₁ und α₂ (bezogen auf die Transportebene oder die Förderrichtung F) ausgebildete Kontaktflächen 480, 482 auf. Auf die gesamte Strecke des Sonotrodenkontakts ergibt sich wiederum ein Kontaktwinkel α. Bei diesem Ausführungsbeispiel ist der Winkel α₁ größer als der Winkel α₂ gewählt.

Anschließend an die Schweißzonen 452 und 472 ist jeweils eine Haltezone mit einer Führungsvorrichtung (nicht gezeigt) vorgesehen, die die formschlüssig miteinander verbundenen Elemente des Verbundprofils 80 in der gewünschten Querschnittsgeometrie hält, so dass der gebildete Formschluss abkühlen kann und am Ende ein handhabbares Verbundprofil 80 mit der gewünschten Geometrie erhalten wird.

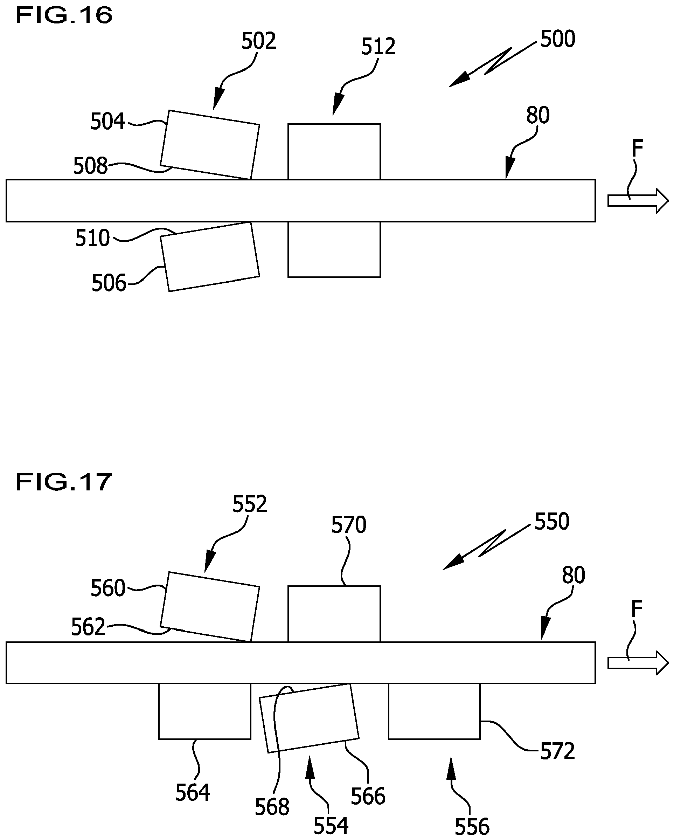

Eine weitere Variante einer Vorrichtung 500 zur erfindungsgemäßen Herstellung eines erfindungsgemäßen Verbundprofils 80 ist schematisch in der Figur 16 gezeigt. Über eine erste Führungsvorrichtung (nicht gezeigt) werden zwei erste Profilteile 82, 82' und zwei zweite Profilteile 84, 86 in der Konfiguration des zu erzielenden Verbundprofils 80 orientiert und einer Schweißzone 502 zugeführt.

Die Schweißzone 502 ist mit zwei Sonotroden 504 und 506 ausgestattet, welche einander gegenüberliegend oberhalb und unterhalb des Verbundprofils 80 angeordnet sind. Die Sonotroden 504, 506 bilden jeweils für einander ein Gegenlager oder eine Auflage aus. Beide Sonotroden 504, 506 sind mit ihren Kontaktflächen 508, 510 in einem Winkel α zur Förderrichtung F angeordnet. Dadurch können die Profilteile des Verbundprofils im Wesentlichen parallel zu dem Energieeintrag und der Plastifizierung des zweiten Kunststoffmaterials der abschmelzbaren Profilbereiche der ersten Profilteile auch in ihre Positionen im fertigen Verbundprofil zusammengeführt werden.

Der Schweißzone 502 folgt in Förderrichtung F wiederum eine Haltezone 512, in der die plastifizierten und verformten Profilbereiche abkühlen und unter Erhalt des Formschlusses mit den zweiten Profilteilen erstarren können.

Mit dieser Vorrichtungsvariante können beide erste Profilteile mit beiden zweiten Profilteilen in einem Schritt und zeitgleich formschlüssig verbunden werden.

Bei einem weiteren Ausführungsbeispiel einer Vorrichtung 550 zur Durchführung des erfindungsgemäßen Verfahrens gemäß Figur 17 sind zwei aufeinanderfolgende Schweißzonen 552, 554 vorgesehen. In der ersten Schweißzone 552 ist eine Sonotrode 560 mit ihrer Kontaktfläche 562 in einem Winkel α gegen die Förderrichtung F geneigt oberhalb des Verbundprofils 80 angeordnet.

Gegenüber der Sonotrode 560 ist eine Auflage 564 vorgesehen, die das Verbundprofil bzw. dessen Profilteile beim Durchlauf durch die Sonotrode 560 stützt.

Darauf folgend ist die zweite Schweißzone 554 vorgesehen mit einer zweiten Sonotrode 566, die unterhalb des Verbundprofils 80 angeordnet ist und eine Kontaktfläche 568 aufweist, welche ebenfalls mit einem Winkel α gegen die Förderrichtung F geneigt ausgerichtet ist.

Gegenüberliegend zur Sonotrode 566 ist ein Führungsblock 570 angeordnet, der zum einen den von der Sonotrode 566 ausgeübten Druck aufnimmt, zum anderen aber zusammen mit einer weiteren Auflage 572 eine Haltevorrichtung bildet, die das Verbundprofil 80 im endgültig zusammengefügten und formschlüssig verbundenen Zustand während des Abkühlens und Erstarrens der in den Schweißzonen gebildeten Formschlusselemente stützt und führt.

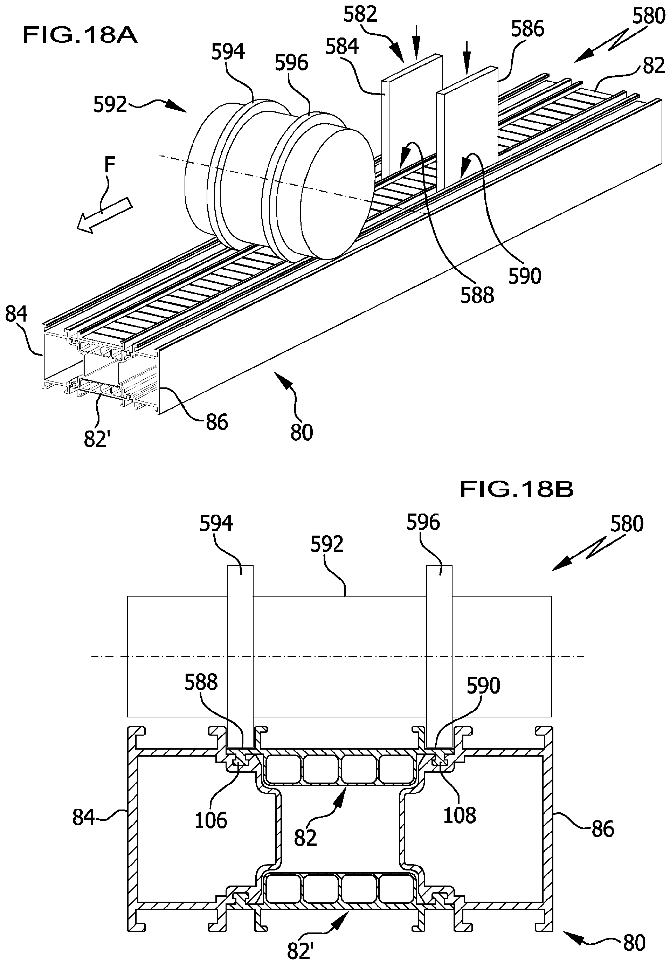

Die Figuren 18A und 18B zeigen eine mögliche konkrete Ausführungsform einer Schweiß- und Haltevorrichtung 580 im Rahmen der Herstellung eines Verbundprofils 80. Hierbei werden die zunächst lose zusammengefügten Teile des Verbundprofils 80 (wie z.B. in Figur 4A und 4B veranschaulicht) in einer Haltevorrichtung (nicht gezeigt) einer Schweißzone 582 zugeführt, in der zwei parallele Sonotrodensegmente 584, 586 angeordnet sind, die mit ihren Kontaktflächen 588 bzw. 590 auf die oben liegende Oberfläche des ersten Profilteils 82 drücken und so die Ultraschallenergie auf das erste Profilteil 82 übertragen, gegenüberliegend zu den Profilbereichen 94, 96, die in eine entsprechende Nut 98 bzw. 99 seitens der zweiten Profilteile 84, 86 eingreifen (entspricht der Darstellung in Figur 4C).

In Förderrichtung F wird das Verbundprofil 80 bzw. werden dessen Bestandteile 82, 82', 84, 86 zu einer Haltevorrichtung gefördert, die hier schematisch mit einer Rolle 592 ausgebildet ist, welche an ihrem Außenumfang zwei parallel zueinander beabstandete ringförmige Vorsprünge 594, 596 aufweist, die - ähnlich wie die beiden Sonotroden 584, 586 - passend in die Oberflächenstruktur des Verbundprofils 82 eingreifen und die plastifizierten Profilbereiche 94, 96 in Form halten, so dass sich in den Aufnahmenuten 98, 99 der zweiten Profilteile 84, 86 ein Formschluss 106, 108 mit dem ersten Profilteil 82 ergeben kann. Es können ebenso in Serie mehrere Rollen 592 angeordnet sein.

Die bei den vorhergehenden Figuren 14 bis 17 diskutierten Auflagen bzw. Gegenlager sind auch hier erforderlich, der Einfachheit halber jedoch nicht gezeigt.

Die Figur 18B zeigt die Vorrichtung 580 in einer Draufsicht vom fertiggestellten Ende des Verbundprofils 80 aus gesehen, wobei nochmals deutlich wird, wie die Vorsprünge 594, 596 der Rolle 592 in die Struktur der Oberseite des Verbundprofils 80 eingreifen, um dort die Verformung der Profilbereiche 94, 96 zu vervollständigen und bei dem Erkalten zu halten.

Eine Durchlaufgeschwindigkeit oder auch Abzugsgeschwindigkeit des fertigen Isolierprofils 80 liegt typischerweise im Bereich von ca. 3 m/min oder mehr, wobei auch deutlich höhere Werte realisierbar sind z.B. von ca. 10 m/min oder mehr.

Die bei den vorgenannten Abzugsgeschwindigkeiten gegebenen Verweildauern der Profilteile in der Schweißzone sind stark werkstoff- und geometrieabhängig und betragen typischerweise ca. 0,2 sec bis ca. 5 sec. Sollte ein höherer Energieeintrag notwendig sein, kann mit etwas geringeren Abzugsgeschwindigkeiten (entspricht somit einer längeren Verweildauer) gearbeitet werden, so dass beim Durchlaufen der Schweißzone ein höherer Energieeintrag (in Bezug auf die Längeneinheit des Formschlusses) stattfinden kann. Bei deutlich höheren Abzugsgeschwindigkeiten wird in der Regel eine Verlängerung der Schweißzone, beispielsweise durch das Anfügen weiterer Sonotroden, erforderlich, was sich aber bei dem erfindungsgemäßen Verfahren typischerweise einfach realisieren lässt.

Die Anpressdauer, d.h. der Zeitraum, in dem das formschlüssig verbundene Verbundprofil durch eine Haltevorrichtung geführt und stabilisiert wird, wird anhand der Zeit konzipiert, die notwendig ist, um das zweite Kunststoffmaterial erstarren zu lassen und das Verbundprofil als solches handhabbar zu machen. Typischerweise sind hier Zeitdauern von ca. 0,2 sec bis wenige Sekunden ausreichend, da die Plastifizierung begrenzt ist und die abzuführende Wärmemenge dadurch relativ gering ist und dazu im Falle der Verwendung von Metallprofilteilen als zweite Profilteile auch eine gute Wärmeableitung gegeben ist.

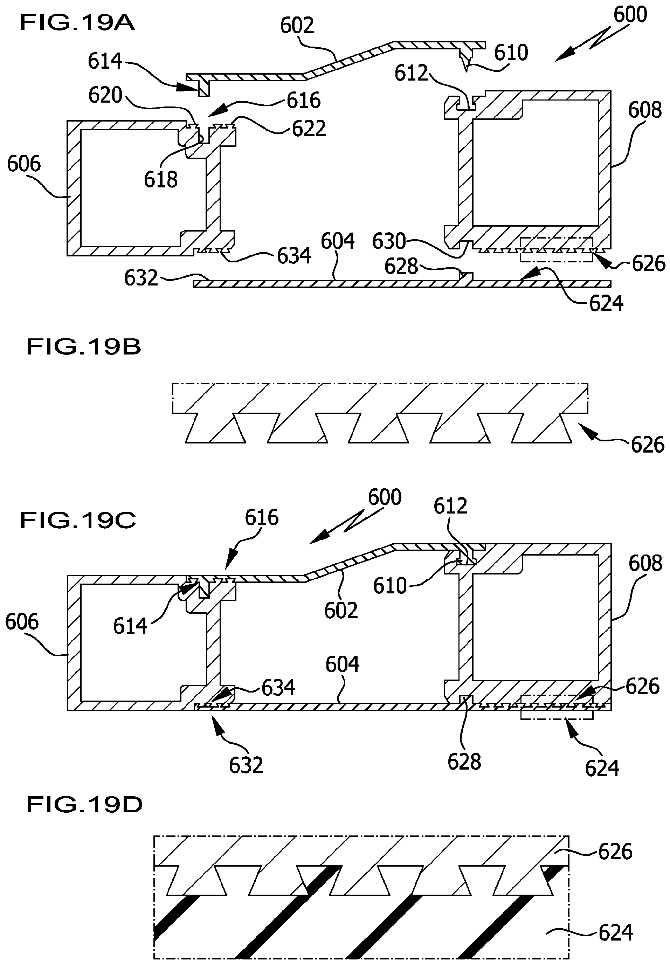

In den Figuren 19A bis 19D wird eine weitere Variante eines erfindungsgemäßen Verbundprofils 600 und dessen Herstellung erläutert, die aufzeigt, wie vielfältig sich das erfindungsgemäße Verfahren realisieren lässt und wie vielfältig darüber hinaus auch die Strukturen, die sich damit herstellen lassen, ausgestaltet sein können.

In der Figur 19A sind die Bestandteile für ein Verbundprofil 600 dargestellt, nämlich ein erstes Profilteil 602, ein zweites Profilteil 604 sowie zwei zweite Profilteile 606 und 608.

Das erste Profilteil 602 weist einen ersten Profilbereich 610 auf, der - wie schon im Zusammenhang mit verschiedenen Ausführungsbeispielen zuvor beschrieben - plastifiziert und in eine nutförmige Ausnehmung 612 seitens des zweiten Profilteils 608 eingeführt und formschlüssig verbunden werden kann.

Auf der gegenüberliegenden Seite des ersten Profilteils 602 ist ein weiterer Profilbereich 614 vorgesehen, dessen zweites Kunststoffmaterial erfindungsgemäß ebenfalls plastifiziert und zum Formschluss mit einer seitens des zweiten Profilteils 606 gegebenen Aufnahmestruktur 616 gebracht wird. Die Aufnahmestruktur 616 unterscheidet sich von der Aufnahmestruktur der Nut 612 dadurch, dass separate Strukturen für die Aufnahme von Querzugkräften und zur Ausbildung des Formschlusses vorliegen und zum einen nur ein Rücksprung 618 ohne Hinterschnitte vorgesehen ist, in die partiell der Profilbereich 614 eingreifen kann. Zum anderen sind an der Oberfläche des Profilteils 606 jeweils benachbart zu dem Rücksprung 618 strukturierte Oberflächenbereiche 620, 622 vorgesehen, bei denen eine Vielzahl von Hinterschnitten bereitgestellt wird, so dass das seitens des Profilbereichs 614 plastifizierte Material in die Strukturen der Oberflächenbereiche 620, 622 eindringen kann, um einen Formschluss zu erzielen. Die strukturierten Bereiche 620, 622 dienen vornehmlich der Fixierung des ersten Profilteils 602 an dem zweiten Profilteil 606, während der verbleibende Vorsprung aus dem Profilbereich 614, der in den Rücksprung 618 eingreift, für die Aufnahme von Zugkräften, die in Breitenrichtung des ersten Profilteils 602 auftreten können, konzipiert ist.

Eine ähnliche Funktionalisierung ist seitens des weiteren ersten Profilteils 604 gegeben, bei dem ein Profilbereich 624 vorgesehen ist, der mit einer Aufnahmestruktur 626 seitens des zweiten Profilteils 608 in Kontakt und letztendlich zu einer formschlüssigen Verbindung gebracht wird. Ergänzend hierzu ist auf derselben Seite des ersten Profilteils 604 ein leistenförmiger Vorsprung 628 vorgesehen, der beim Zusammenfügen des ersten Profilteils 604 mit dem zweiten Profilteil 608 in einen Rücksprung 630 eingreift, um vorrangig Querzugkräfte aufzunehmen.

Auf der anderen Seite des ersten Profilteils 604 ist wiederum ein Profilbereich 632 vorgesehen, der mit einer Aufnahmestruktur mit einer Vielzahl von Hinterschnitten 634 seitens des zweiten Profilteils 606 in Kontakt gebracht werden kann und dabei im Rahmen der Plastifizierung und des Zusammenführens der beiden Profilteile zu einer formschlüssigen Verbindung umgeformt wird.

Die Aufnahmestruktur mit der Vielzahl von Hinterschnitten, wie sie in den Aufnahmestrukturen 620, 622, 626 und 634 verwendet wird, wird in vergrößerter Ansicht nochmals im Querschnitt in Figur 19B im Rahmen eines Ausschnitts der Aufnahmestruktur 626 dargestellt.

Derartige Aufnahmestrukturen können z.B. durch ein Strangpressverfahren selbst in Aluminiumprofile eingebracht werden oder in anderer Ausprägung durch Oberflächen-Nachbearbeitungsschritte, z.B. durch mechanische, chemische/physikalische Oberflächen-Nachbearbeitung.

Figur 19C zeigt das Verbundprofil 600 im fertig verbauten Zustand seiner Profilteile einschließlich der dabei erzielten Formschlussverbindungen der Profilbereiche 610, 614, 624 und 632 einerseits sowie den Aufnahmestrukturen 612, 618, 620, 622, 626 und 634 andererseits.

Die Figur 19D zeigt nochmals in Ergänzung zur Figur 19B den mit Hinterschnitten strukturierten Aufnahmebereich 626, nachdem das zweite Kunststoffmaterial des Profilbereichs 624 plastifiziert und in die Aufnahmestruktur 626 eingebracht wurde und damit nach dem Erstarren den Formschluss gebildet hat.

## Patentansprüche

1. Verfahren zur Herstellung eines sich in eine Längsrichtung erstreckenden Verbundprofils, umfassend
Bereitstellen eines ersten sich in eine Längsrichtung erstreckenden Profilteils aus einem ersten Kunststoffmaterial mit einem Profilbereich, wobei der Profilbereich aus einem bei einer ersten Temperatur T₁ thermisch plastifizierbaren zweiten Kunststoffmaterial hergestellt ist, Bereitstellen eines zweiten sich in eine Längsrichtung erstreckenden Profilteils, welches aus einem bei der ersten Temperatur T₁ thermisch nicht plastifizierbaren Material hergestellt ist, wobei das zweite Profilteil eine entlang der Längsrichtung des zweiten Profilteils ausgebildete Aufnahmestruktur aufweist, mit der der Profilbereich des ersten Profilteils formschlüssig verbindbar ist,
In-Kontakt-Bringen des Profilbereichs des ersten Profilteils mit der Aufnahmestruktur des zweiten Profilteils,
Plastifizieren des zweiten Kunststoffmaterials des Profilbereichs mittels Erwärmen auf die erste Temperatur T₁ und
Verformen des plastifizierten Profilbereichs unter Ausbildung eines Formschlusses zwischen dem Profilbereich und der Aufnahmestruktur, wobei die Geometrie der Aufnahmestruktur während der Ausbildung des Formschlusses im Wesentlichen unverändert bleibt.

2. Verfahren nach Anspruch 1, wobei die Aufnahmestruktur mit einem sich in Längsrichtung erstreckenden Aufnahmebereich ausgebildet wird, der insbesondere die Form einer Aufnahmenut aufweist; und/oder
wobei das zweite Profilteil mit einer Aufnahmestruktur ausgebildet wird, welche eine Mehrzahl an Ausnehmungen umfasst, welche in Längsrichtung des zweiten Profilteils angeordnet sind.

3. Verfahren nach Anspruch 1 oder 2, wobei der Profilbereich des ersten Profilteils als ein vorspringender Profilbereich ausgebildet wird, insbesondere als kontinuierlicher, sich in Längsrichtung des ersten Profilteils erstreckender Vorsprung oder als mehrere in Längsrichtung des ersten Profilteils hintereinander mit Abstand zueinander angeordnete Vorsprungsegmente; und/oder
wobei das erste Profilteil mit einem zweiten, aus dem zweiten Kunststoffmaterial gebildeten Profilbereich ausgebildet wird, welcher sich parallel zum ersten Profilbereich mit vorgegebenem Abstand in Längsrichtung des ersten Profilteils erstreckt;
wobei optional ein drittes sich in eine Längsrichtung erstreckendes Profilteil aus einem bei der ersten Temperatur T₁ thermisch nicht plastifizierbaren Material bereitgestellt wird, wobei das dritte Profilteil eine sich in dessen Längsrichtung erstreckende Aufnahmestruktur aufweist, und wobei der zweite Profilbereich mit dem Aufnahmebereich des dritten Profilteils im Wesentlichen gleichzeitig oder zeitlich versetzt zu dem In-Kontakt-Bringen des ersten Profilbereichs mit dem Aufnahmebereich des zweiten Profilteils in Kontakt gebracht, plastifiziert und unter Ausbildung eines Formschlusses verformt wird.

4. Verfahren nach einem der Ansprüche 1 bis 3, wobei das bei der ersten Temperatur T₁ thermisch nicht plastifizierbare Material des zweiten und/oder dritten Profilteils ausgewählt ist aus einem metallischen Werkstoff, insbesondere basierend auf Aluminium oder Eisen, einem Keramikwerkstoff, Glas, Holz, einem thermoplastischen Kunststoffmaterial mit einem Schmelzpunkt oder einer Glasübergangstemperatur oberhalb der ersten Temperatur T₁ und einem duroplastischen Kunststoffmaterial.

5. Verfahren nach einem der Ansprüche 1 bis 7, wobei das thermisch plastifizierbare zweite Kunststoffmaterial ausgewählt ist aus thermoplastischen Polymerwerkstoffen auf der Basis von Polyamiden, Polyimiden, Polyestern, Polyolefinen insbesondere Polyethylen und Polypropylen, Polyketonen, Vinylpolymeren, insbesondere Polystyrol und Polyvinylchlorid, Polyether, insbesondere Polyphenylenether, Polycarbonat, Polyphenylensulfid und deren Mischformen, insbesondere Polyetherketone, Polyetheretherketone und Polyetherimide, und sowie Copolymeren und deren Blends; und/oder
wobei das erste und/oder das zweite Kunststoffmaterial Füll- und/oder Verstärkungsstoffe enthalten, welche insbesondere ausgewählt sind aus Glasfasern, Metallfasern, Kohlefasern, Kunststofffasern, Mineralfasern sowie Mischungen hiervon, wobei die Fasern vorzugsweise in Form von Kurzfasern, Langfasern, Endlosfasern, Fasergeweben, Fasergelegen und Faserfilzen verwendet werden.

6. Verfahren nach einem der Ansprüche 1 bis 5, wobei das erste und das zweite Kunststoffmaterial auf demselben Polymerwerkstoff basieren; und/oder
wobei das erste Profilteil mindestens partiell porös ausgebildet wird.

7. Verfahren nach einem der Ansprüche 1 bis 6, wobei die Verfahrensschritte des In-Kontakt-Bringens des oder der Profilbereiche des ersten Profilteils mit der bzw. den Aufnahmestruktur(en) des zweiten und gegebenenfalls des dritten Profilteils, das Plastifizieren und das Verformen kontinuierlich oder intermittierend durchgeführt werden; und/oder
wobei der Formschluss oder die Formschlüsse mit einer Schubfestigkeit in Längsrichtung des Verbundprofils von ca. 2 N/mm oder mehr hergestellt wird bzw. werden.

8. Verfahren nach einem der Ansprüche 1 bis 7, wobei das Plastifizieren des zweiten Kunststoffmaterials mittels Ultraschall, vorzugsweise unter Verwendung einer oder mehrerer Sonotrode(n), erfolgt; und/oder
wobei das erste und/oder das zweite Profilteil und/oder das dritte Profilteil als Endlosmaterial oder als Stangenware bereitgestellt werden; und/oder
wobei das zweite Profilteil und/oder das dritte Profilteil mit einer Aufnahmestruktur in Form einer Ausnehmung bereitgestellt wird bzw. werden, welche im Querschnitt senkrecht zur Längsrichtung des Verbundprofils gesehen zumindest abschnittsweise einen Hinterschnitt aufweist; und/oder
wobei der Querschnitt der Aufnahmestruktur des zweiten Profilteils und/oder des dritten Profilteils senkrecht zur Längsrichtung des Verbundprofils gesehen entlang der Längsrichtung in seiner Breite und/oder Tiefe variiert.

9. Verfahren nach einem der Ansprüche 1 bis 8, wobei das erste Profilteil und das zweite sowie gegebenenfalls das dritte Profilteil vor dem Plastifizieren des Profilbereichs oder der Profilbereiche mittels einer ersten Führungsvorrichtung in einer vorgegebenen, gegebenenfalls veränderlichen Relativposition zueinander positioniert und in der Längsrichtung des Verbundprofils geführt werden; und/oder
wobei das erste Profilteil und das zweite sowie gegebenenfalls das dritte Profilteil nach dem Plastifizieren und Verformen des Profilbereichs oder der Profilbereiche mittels einer zweiten Führungsvorrichtung in einer vorgegebenen, gegebenenfalls veränderlichen Relativposition zueinander positioniert und in der Längsrichtung geführt werden; und/oder
wobei das erste Profilteil und das zweite sowie gegebenenfalls das dritte Profilteil nach dem Plastifizieren und Verformen des Profilbereichs oder der Profilbereiche und beim Durchlaufen einer optionalen zweiten Führungsvorrichtung im Anschluss an das Plastifizieren und Verformen des oder der Profilbereiche mit einer vorgegebenen Kraft gegeneinandergepresst und danach in derselben oder einer weiteren vorgegebenen Relativposition bis zum Erstarren des plastifizierten zweiten Kunststoffmaterials gehalten werden; und/oder
wobei das erste Profilteil und das zweite sowie gegebenenfalls das dritte Profilteil nach dem Plastifizieren und Verformen des Profilbereichs oder der Profilbereiche und beim Durchlaufen einer optionalen zweiten Führungsvorrichtung im Anschluss an das Plastifizieren und Verformen des oder der Profilbereiche in einer vorgegebenen Relativposition gegeneinander gepresst und danach in derselben oder einer weiteren vorgegebenen Relativposition bis zum Erstarren des plastifizierten zweiten Kunststoffmaterials gehalten werden.

10. Verfahren nach einem der Ansprüche 1 bis 9 wobei der Profilbereich oder die Profilbereiche des ersten Profilteils als Vorsprung bzw. Vorsprünge ausgebildet werden, welche(r) sich von einer Oberfläche des ersten Profilteils um ca. 10 mm oder weniger, bevorzugt ca. 6 mm oder weniger weg erstrecken; und/oder
wobei das erste Profilteil und das zweite Profilteil, gegebenenfalls zusammen mit dem dritten Profilteil, einander unter einem spitzen Winkel bezüglich der Längsrichtung des Verbundprofils zugeführt werden, wobei sich die Führung unter einem spitzen Winkel zumindest über Teilbereiche der Zone der Plastifizierung und Verformung und gegebenenfalls in der ersten und/oder zweiten Führungsvorrichtung erstreckt.

11. Verfahren nach einem der Ansprüche 1 bis 10, wobei das Plastifizieren in der Zone durch Ultraschalleintrag, bevorzugt im Nahfeld-Verfahren durchgeführt wird, wobei dabei eine Sonotrode einen direkten Kontakt zu einem der Profilteile aufweist und wobei vorzugsweise die Sonotrode mit einem Abstand von ca. 10 mm oder weniger, bevorzugt ca. 6 mm oder weniger zu den weiteren Profilkörpern angeordnet wird; und/oder
wobei die Zone für das Plastifizieren, in Längsrichtung des Verbundprofils gemessen, eine Länge von ca. 5 cm bis ca. 100 cm, bevorzugt eine Länge von ca. 5 bis ca. 50 cm, aufweist, wobei gegebenenfalls eine Ultraschalleinheit mit einer oder mehreren Sonotroden für das Plastifizieren verwendet wird.

12. Verfahren nach einem der Ansprüche 8 bis 11, wobei die Kontaktfläche(n) der Sonotrode(n) in der Zone des Plastifizierens und Verformens, bezogen auf die Längsrichtung des bzw. der mit der oder den Sonotrode(n) in Kontakt stehenden Profilteils/Profilteile, einen Abstand zu einer Oberfläche des anderen Profilteils bzw. der anderen Profilteile des Verbundprofils aufweist/aufweisen, der sich entlang der Längsrichtung des Verbundprofils in Durchlaufrichtung gesehen vermindert; wobei optional
die Kontaktfläche(n) unterschiedliche Winkelpositionen einnimmt/einnehmen, wobei die Winkelpositionen kontinuierlich und/oder stufenweise variieren; und/oder
wobei die in der Zone des Plastifizierens und Verformens verwendete Sonotrode eine statische Sonotrode ist, welche insbesondere als Schleifsonotrode ausgebildet ist; und/oder
wobei die Sonotrode kontinuierlich betrieben wird.

13. Verfahren nach einem der Ansprüche 1 bis 12, wobei das erzeugte Verbundprofil mit einer Geschwindigkeit von ca. 3 m/min oder mehr, insbesondere ca. 10 m/min oder mehr in Längsrichtung des Verbundprofils gefördert wird; und/oder
wobei die Verweildauer der Profilteile in der Zone des Plastifizierens und Verformens ca. 0,1 sec bis ca. 10 sec, bevorzugt ca. 0,2 sec bis ca. 5 sec beträgt.

14. Verbundprofil, hergestellt nach einem Verfahren gemäß einem der Ansprüche 1 bis 13;
wobei optional das erste Profilteil ein oder mehrere Funktionselemente aufweist; und/oder
wobei das zweite Profilteil eine Sichtseitenoberfläche aufweist, an der die Aufnahmestruktur ausgebildet ist.

15. Verbundprofil nach Anspruch 14, wobei das erste Profilteil mit einem Flächenbereich nach Ausbildung des Formschlusses fluchtend mit der Sichtseitenoberfläche angeordnet ist; und/oder
wobei das erste Profilteil nach Ausbildung des Formschlusses den Bereich des zweiten Profilteils, an dem die Aufnahmestruktur ausgebildet ist, im Wesentlichen vollständig überdeckt.

16. Verbundprofil nach Anspruch 14 oder 15, wobei das Verbundprofil eine Sichtseitenoberfläche aufweist, welche von der Sichtseitenoberfläche des zweiten Profilteils, einem mit der Sichtseitenoberfläche des zweiten Profilteils fluchtend angeordneten Flächenbereich des ersten Profilteils sowie gegebenenfalls einer Sichtseitenoberfläche eines dritten Profilteils gebildet wird, wobei vorzugsweise die Sichtseitenoberfläche des dritten Profilteils fluchtend mit dem Flächenbereich des ersten Profilteils angeordnet ist; und/oder
wobei das Verbundprofil als Hohlprofil ausgebildet ist und eine Hohlkammerstruktur aufweist, welche von zwei sich gegenüberliegend angeordneten ersten Profilteilen und zwei sich gegenüberliegend angeordneten zweiten Profilteilen umgeben und gebildet ist.
